# EUROPEAN PATENT APPLICATION

(11) **EP 4 609 976 A1**
(43) Date of publication of application: **03.09.2025**
(21) Application number: 25152701.6
(22) Date of filing: 20.01.2025
(51) Int. Cl.: B23D 45/16, B23D 59/02, B25F 5/00

(54) **CUT-OFF SAW**

(30) Priority: 29.02.2024 CN 202410226917; 24.12.2024 CN 202411918809; 24.12.2024 CN 202423197085 U
(71) Applicant: Nanjing Chervon Industry Co., Ltd., Nanjing, Jiangsu 211106 (CN)
(72) Inventor: CUI, Sanwei, Nanjing (CN); LI, Xiao, Nanjing (CN); WANG, Shisheng, Nanjing (CN); YUE, Changquan, Nanjing (CN); MA, Hongyan, Nanjing (CN); CHENG, Cheng, Nanjing (CN)
(74) Representative: Sun, Yiming

(57) **Abstract**

A cut-off saw (100) includes a housing(110); an electric motor (120) having a motor shaft (121); an output shaft (130) for mounting and driving a saw blade (150); a transmission assembly (140) for transmitting power between the motor shaft (121) and the output shaft (130); a circuit board assembly (180) including a circuit board (181) and a heat dissipation member (182), where the circuit board (181) is connected to the heat dissipation member (182); and a heat conductive member (190) connected to the housing (110), where the heat conductive member (190) is at least partially located outside the housing (110). The housing has an opening (167), and the heat dissipation member (182) is at least partially exposed relative to the housing (110) through the opening (167) and is in thermal contact with the heat conductive member (190).

## Description

### TECHNICAL FIELD

The present application relates to the technical field of power tools, for example, a cut-off saw.

### BACKGROUND

A cut-off saw in the related art may be handheld and used for cutting concrete or the like. An air-cooling heat dissipation solution is adopted in which an electric motor drives a fan to rotate so that the airflow outside the housing flows through a circuit board, the electric motor, and other heat-generating components inside the housing and then is discharged from the housing. In heavy load conditions, the existing air-cooling solution cannot satisfy the heat dissipation requirements.

This part provides background information related to the present application, and the background information is not necessarily the existing art.

### SUMMARY

A cut-off saw includes a housing; an electric motor having a motor shaft; an output shaft for mounting and driving a saw blade; a transmission assembly for transmitting power between the motor shaft and the output shaft; a circuit board assembly including a circuit board and a heat dissipation member, where the circuit board is connected to the heat dissipation member; and a heat conductive member connected to the housing, where the heat conductive member is at least partially located outside the housing. The housing has an opening, and the heat dissipation member is at least partially exposed relative to the housing through the opening and is in thermal contact with the heat conductive member.

In some examples, the heat dissipation member is a heat dissipation box, a side of the heat dissipation box facing away from the circuit board has multiple heat dissipation through holes, and the multiple heat dissipation through holes penetrate a box body of the heat dissipation box along a direction basically parallel to a plane where the circuit board is located.

In some examples, the opening is located on the front bottom surface of the housing, the heat conductive member is connected to the housing around the opening and has a heat conductive plane covering the opening, and the heat dissipation member is in contact with the heat conductive member through the heat conductive plane.

In some examples, the cut-off saw further includes a liquid cooling system, where the liquid cooling system sprays coolant onto the saw blade when the saw blade is cutting, and the coolant moves through the heat conductive member after leaving the saw blade.

In some examples, the liquid cooling system includes a transfer pipe for transmitting coolant, a groove for the transfer pipe to pass through is formed inside the housing, and an extension path of the transfer pipe passes through the housing around the periphery of the circuit board assembly.

In some examples, the projection of the transfer pipe and the projection of the circuit board in the up and down direction at least partially coincide; and/or the projection of the transfer pipe and the projection of the heat dissipation member in the up and down direction at least partially coincide.

In some examples, the cut-off saw further includes a sealing member, where the sealing member is disposed around the opening and fills the gaps between the housing, the heat dissipation member, and the heat conductive member.

In some examples, the cut-off saw further includes a fan, where the fan is mounted on the motor shaft, the housing has an air inlet and an air outlet, and the cooling airflow enters the housing from the air inlet, flows through the circuit board assembly and the electric motor in sequence, and is discharged from the air outlet.

In some examples, the air inlet is located on the left wall and/or the right wall of the middle and rear part of the housing, and the air outlet is located at the front part of the housing.

In some examples, the heat conductive member is a wear-resistant metal member.

A cut-off saw includes a housing; an electric motor having a motor shaft; an output shaft for mounting and driving a saw blade; and a transmission assembly for transmitting power between the motor shaft and the output shaft. The cut-off saw further includes a circuit board assembly including a circuit board and a heat dissipation member, where the circuit board is connected to the heat dissipation member. The housing has an opening, and the heat dissipation member is at least partially exposed relative to the housing through the opening.

In some examples, the housing includes a body portion extending along the front and rear direction, the body portion has a support surface for supporting the cut-off saw when the cut-off saw is placed horizontally, the motor shaft extends along a motor axis, and the motor axis obliquely intersects with the support surface.

In some examples, the output shaft is located outside the housing, and the output shaft is basically parallel to the support surface and extends along the left and right direction of the housing.

In some examples, the cut-off saw further includes a second housing, where the second housing is connected to the housing and is located outside the housing, the transmission assembly is at least partially located in the second housing, and the central axis of the second housing obliquely intersects with a support surface.

In some examples, the transmission assembly includes a long shaft and a bevel gearset, the long shaft is connected to and collinear with the motor shaft, and the bevel gearset is connected between the long shaft and the output shaft to transmit power.

In some examples, the cut-off saw further includes a shaft locking assembly disposed on the second housing, and the shaft locking assembly includes an operating member and a shaft locking member connected to each other. Shaft locking grooves are circumferentially disposed on the long shaft. The shaft locking member may be embedded in the shaft locking groove. The shaft locking grooves extend along a direction basically parallel to the long shaft. The operating member is operated by the user to push the operating member and the shaft locking member along the direction basically parallel to the long shaft so that the shaft locking member is embedded in the shaft locking groove, thereby locking the rotation of the output shaft.

In some examples, the cut-off saw further includes a heat conductive member, where the heat conductive member, the heat dissipation member, and the second housing are connected; the heat dissipation member, the heat conductive member, the second housing, and the saw blade are all made of conductive materials, and the static electricity generated in a cutting process is transferred to the saw blade through the heat dissipation member, the heat conductive member, and the second housing and then released to the ground.

In some examples, the cut-off saw further includes a guard and a guard adjustment mechanism, and the guard is connected to the second housing through the guard adjustment mechanism. The guard adjustment mechanism includes an adjustment bolt and an adjustment handle. A rotation track is disposed on a side of the guard facing the second housing. An end of the adjustment bolt is fixedly connected to the second housing, and the other end of the adjustment bolt is rotatably connected to the guard through the rotation track. The adjustment handle releases or locks the relative rotation between the adjustment bolt and the guard, thereby locking or releasing the relative rotation between the second housing and the guard.

In some examples, the guard adjustment mechanism performs stepless adjustment on the angle of rotation of the guard about the output shaft. The guard is rotatable about the output shaft within a range of 0° to 45°.

In some examples, the circuit board is located below the electric motor, and the projection of the circuit board and the projection of the electric motor in the up and down direction at least partially coincide.

A cut-off saw includes a housing; an electric motor having a motor shaft; an output shaft for mounting and driving a saw blade; and a transmission assembly for transmitting power between the motor shaft and the output shaft. The cut-off saw further includes a circuit board assembly including a circuit board and a heat dissipation box, where the circuit board is connected to the heat dissipation box, a side of the heat dissipation box facing away from the circuit board has multiple heat dissipation through holes, and the multiple heat dissipation through holes penetrate a box body of the heat dissipation box along a direction basically parallel to a plane where the circuit board is located; and an air guide plate connected to the housing and located inside the housing. The housing has an air inlet, where the housing, the air guide plate, and the heat dissipation box form a first airflow channel between the air inlet and the multiple heat dissipation through holes, and the cooling airflow enters the housing from the air inlet and passes through the first airflow channel and the multiple heat dissipation through holes in sequence.

In some examples, the housing has the air outlet, and the electric motor has a motor housing. The housing and the motor housing form a second airflow channel between the electric motor and the air outlet, and the cooling airflow flows through the electric motor in the motor housing and is discharged from the air outlet through the second airflow channel.

In some examples, the first airflow channel is basically sealed between the air inlet and the multiple heat dissipation through holes, and/or the second airflow channel is basically sealed between the electric motor and the air outlet.

In some examples, the heat dissipation box is located below the electric motor, the projection of the heat dissipation box and the projection of the electric motor in the up and down direction at least partially coincide, and the cooling airflow passes through the heat dissipation through holes and then enters the motor housing through the inner cavity of the housing.

In some examples, the cut-off saw further includes a guard and a liquid cooling system, the saw blade is partially accommodated in the guard, and the liquid cooling system sprays coolant onto the saw blade when the saw blade is cutting. The liquid cooling system includes a nozzle, and the nozzle penetrate the guard to output the coolant.

In some examples, the nozzle includes a left nozzle and a right nozzle, and the left nozzle is disposed on the left end surface of the guard, the right nozzle is disposed on the right end surface of the guard.

In some examples, the liquid cooling system further includes a liquid inlet valve and a transfer pipe, where the transfer pipe is used for transferring the coolant, and the liquid inlet valve adjusts the flow rate of the coolant in the transfer pipe.

In some examples, the left nozzle and/or the right nozzle each include a first member and a second member, the first member is connected to the guard, a through hole penetrating the guard exists, and the second member is detachably connected to the first member. In a state in which the second member is mounted to the first member, an end of the through hole facing away from the guard is closed by the second member. In a state in which the second member is disassembled from the first member, the end of the through hole facing away from the guard is opened.

In some examples, the cut-off saw further includes a second housing located outside the housing, and the transmission assembly is at least partially accommodated in the second housing; the liquid cooling system further includes a transfer pipe for transferring coolant, and the transfer pipe extends from the front end of the housing, passes through the gap between the second housing and the guard, crosses over the guard, and is connected to the left nozzle and the right nozzle.

In some examples, the upper part of the guard is provided with a guard handle for the user to operate to rotate the guard. When the transfer pipe crosses over the guard, the transfer pipe is limited by the guard handle.

In some examples, the cut-off saw further includes a support guide member. The support guide member has a support portion located between the second housing and the guard. The transfer pipe passes through the support portion and is limited by the support portion.

A cut-off saw includes a housing; an electric motor having a motor shaft; an output shaft for mounting and driving a saw blade; and a transmission assembly for transmitting power between the motor shaft and the output shaft. The cut-off saw further includes a battery pack. The battery pack supplies power to at least the electric motor, the housing includes a body portion and a battery compartment cover, a battery compartment is formed inside the body portion, and the battery compartment cover has a closed state and an open state. In the closed state, the battery compartment cover seals the battery compartment; and in the open state, the battery pack is detachably inserted into or removed from the battery compartment along the left and right direction.

In some examples, the battery compartment cover is rotatably connected to the body portion. The battery compartment cover is rotatable about a pivot axis, and the pivot axis is perpendicular to the bottom surface of the housing.

In some examples, the battery compartment cover in the open state can freely rotate about the pivot axis with an angle of 0° to 180° relative to the closed state.

In some examples, the battery compartment cover in the open state rotates about the pivot axis to a preset angle relative to the closed state and remains at the preset angle, where the preset angle is greater than or equal to 90° and less than or equal to 180°.

In some examples, one of the body portion and the battery compartment cover is provided with a second snap catch, the other one of the body portion and the battery compartment cover is provided with a second snap groove, and the second snap catch mates with the second snap groove, thereby sealing the battery compartment. The battery compartment cover is rotatably connected to the body portion via a connecting shaft. The connecting shaft extends along the pivot axis. The connecting shaft is connected to an elastic member. When the second snap catch disengages from the second snap groove, the elastic member causes the battery compartment cover to rotate about the pivot axis to the preset angle relative to the closed state and remain at the preset angle.

In some examples, one of the battery pack and the battery compartment is provided with a first snap catch, and the other one of the battery pack and the battery compartment is provided with a first snap groove. The first snap catch mates with the first snap groove so that the battery pack can be locked to the battery compartment. The cut-off saw further includes a battery pack ejection mechanism disposed on the inner wall of the battery compartment. When the first snap catch disengages from the first snap groove, at least part of the battery pack pops up from the battery compartment through the battery pack ejection mechanism along the insertion and removal direction.

In some examples, a circuit wire and a terminal block are provided on the inner wall of the battery compartment. The cut-off saw further includes a circuit cover plate disposed in the battery compartment. The circuit cover plate mates with the inner wall of the battery compartment, thereby limiting the circuit wire.

In some examples, the terminal block is disposed on the upper inner wall of the battery compartment; the circuit wire and the circuit cover plate are disposed on the left inner wall or the right inner wall of the battery compartment facing away from the battery compartment cover.

A cut-off saw includes a housing; an electric motor having a motor shaft; an output shaft for mounting and driving a saw blade; a transmission assembly for transmitting power between the motor shaft and the output shaft; and a battery pack for supplying power to at least the electric motor. The housing of the battery pack is provided with an indicator for displaying the state information of the battery pack. A battery compartment is formed inside the housing. The battery pack is detachably inserted into or removed from the battery compartment. The housing has a transparent portion, and the transparent portion is aligned with the indicator so that the state information displayed by the indicator can be observed through the transparent portion.

In some examples, the indicator displays at least the remaining power information of the battery pack.

In some examples, the indicator is the remaining power indicator light for the battery pack.

In some examples, the housing includes a body portion, a grip, and a battery compartment cover. The grip is at least partially located behind the body portion. The battery compartment cover seals the battery compartment. The transparent portion is located on the upper rear side of the body portion and in front of the grip, and/or the transparent portion is located on the battery compartment cover.

In some examples, the housing is provided with a first operating member, and the first operating member is operated by the user to make the indicator display the state information.

In some examples, the housing of the battery pack is further provided with a second operating member for the user to operate so that the indicator displays the state information. The second operating member is connected to the first operating member.

In some examples, the housing is provided with a battery indicator, and the battery indicator is electrically connected to the circuit board to acquire and display the state information of the battery pack.

In some examples, the battery indicator includes an operating portion, an indicator portion, and a sub-circuit board. The sub-circuit board is electrically connected to the operating portion, the indicator portion, and the circuit board. In response to the signal sent by the operating portion operated by the user, the sub-circuit board acquires the state information of the battery pack from the circuit board and triggers the indicator portion to display the corresponding information.

In some examples, the operating portion and the indicator portion may be embedded in the surface of the housing, and the sub-circuit board may be disposed on the back side of the operating portion and the indicator portion and located inside the housing.

In some examples, the sub-circuit board and the circuit board may be electrically connected by a flat cable, and the flat cable may be attached to the inner wall of the housing.

In some examples, the state information of the battery pack includes the remaining power information and/or fault warning information of the battery pack.

In some examples, the indicator portion includes a remaining power indicator light or a display screen.

A cut-off saw includes a housing; an electric motor having a motor shaft; an output shaft for mounting and driving a saw blade; a transmission assembly for transmitting power between the motor shaft and the output shaft; and a battery pack for supplying power to at least the electric motor. The housing is provided with a battery indicator, and the battery indicator is electrically connected to the circuit board to acquire and display the state information of the battery pack.

A cut-off saw includes a housing; an electric motor having a motor shaft; an output shaft for mounting and driving a saw blade; a transmission assembly for transmitting power between the motor shaft and the output shaft; and a second housing located outside the housing and accommodating at least part of the transmission assembly. The second housing is provided with a through hole to allow the airflow and/or lubricant to flow through. The cut-off saw further includes an expansion cover. The expansion cover covers the through hole and is sealingly connected to the second housing, thereby forming a sealed space with variable volume that is opened only to the through hole and is between the expansion cover and the second housing.

In some examples, the expansion cover is made of a soft rubber material, and the soft rubber material includes rubber or silicone.

In some examples, the second housing includes a second housing body and a first end cover, the first end cover and the second housing body are sealing connected to form a first accommodation space for accommodating at least the transmission assembly, the first end cover is provided with a through hole, and the expansion cover is mounted to the first end cover.

In some examples, the second housing further includes a second end cover, the second end cover is mounted to the first end cover, and the expansion cover is sandwiched between the first end cover and the second end cover.

In some examples, a second accommodation space for accommodating at least a bearing assembly is formed between the second end cover and the first end cover.

In some examples, a docking portion of the first end cover and a docking portion of the second end cover are opposite to each other, and the expansion cover is clamped and fixed between the docking portions.

In some examples, the docking portions partition the second accommodation space into a space where the bearing assembly is located and a space where the expansion cover is located.

In some examples, the second end cover is provided with an opening connecting with the outside, and the expansion cover divides the second accommodation space between the second end cover and the first end cover into at least a sealed space connecting with the first accommodation space through the through hole on the first end cover and an open space connecting with the outside through the opening on the second end cover.

In some examples, in the case of an increase in temperature and/or pressure within the first accommodation space that is between the first end cover and the second housing body and accommodates the transmission assembly, the gas and/or lubricant in the first accommodation space enters the gap between the expansion cover and the first end cover via the through hole.

In some examples, an end of the output shaft and the transmission assembly are connected in the first accommodation space, and after the output shaft passes through the first end cover and the second end cover, the other end of the output shaft enters the guard and is used for mounting and driving the saw blade.

A cut-off saw includes a housing; an electric motor having a motor shaft; an output shaft for mounting and driving a saw blade; and a transmission assembly for transmitting power between the motor shaft and the output shaft. The cut-off saw further includes a hook assembly through which the entire cut-off saw is suspended in a basically vertical posture at a support point.

In some examples, the hook assembly is disposed on the bottom surface of the housing.

In some examples, the hook assembly is disposed at a higher portion of the bottom surface of the housing along the up and down direction.

In some examples, the housing includes a body portion extending along the front and rear direction, a battery compartment is formed inside the body portion, and the hook assembly is disposed on the bottom surface of the housing below the battery compartment.

In some examples, the housing includes a main handle located at the rear of the cut-off saw, and the hook assembly is disposed on the bottom surface of the main handle or at the rear end of the main handle.

In some examples, the hook assembly has a storage state and a suspended state, the hook assembly is rotatably connected to the housing, and the hook assembly rotates relative to the housing to switch between the storage state and the suspended state.

In some examples, the hook assembly includes a hook body and a mounting member, the mounting member is fixedly connected to the housing, and the hook body is rotatably connected to the mounting member.

In some examples, the hook body in the suspended state may be rotated about the mounting member by at least 90° relative to the hook body in the storage state.

In some examples, the bottom surface of the housing of the cut-off saw in the suspended state is basically perpendicular to the ground, and the surface where the hook body is located is basically perpendicular to the bottom surface of the housing, where the bottom surface of the housing when the cut-off saw is placed horizontally is basically parallel to the ground.

In some examples, in the suspended state, the surface where the hook body is located is basically parallel to the bottom surface of the housing.

A cut-off saw includes a housing; an electric motor having a motor shaft; an output shaft for mounting and driving a saw blade; and a transmission assembly for transmitting power between the motor shaft and the output shaft. The cut-off saw further includes a shaft locking assembly having a locking state for locking the rotation of the output shaft and an unlocking state for releasing the rotation of the output shaft and including a shaft locking member, an elastic member, and a support limiting member. The transmission assembly has shaft locking grooves. The shaft locking member can be embedded in the shaft locking groove to block the power transmission to the output shaft. The elastic member abuts against the shaft locking member, and the shaft locking member always tends to be embedded in the shaft locking groove due to the elastic deformation of the elastic member. The shaft locking member is configured to rotate upward or downward relative to the support limiting member under the constraint of the support limiting member, thereby achieving the switching of the shaft locking assembly between the locking state and the unlocking state.

In some examples, the shaft locking assembly further includes an operating member connected to or formed on the shaft locking member, and the operating member rotates to switch between a locking position and an unlocking position.

In some examples, the rotation axis of the operating member is collinear with or parallel to the rotation axis of the shaft locking member.

In some examples, the support limiting member has a helical track along the circumferential direction of the shaft locking member, the shaft locking member is connected to or formed with a mating portion, and under the constraint of the track, the mating portion moves along the helical track to drive the shaft locking member to rotate upward or downward.

In some examples, the helical track of the support limiting member is at least partially accommodated in the operating member.

In some examples, locking portions are provided at two ends of the helical track. When the mating portion moves to one of the two ends of the helical track, the mating portion is limited by the locking portion, thereby maintaining the shaft locking assembly in the locking state or the unlocking state.

In some examples, when the operating member is rotated to switch from one of the locking position and the unlocking position to the other one of the locking position and the unlocking position, the mating portion overcomes the limit of the locking portion at an end of the helical track and is driven by the elastic member or overcomes the drive of the elastic member to rotate upward or downward along the helical track until the mating portion reaches the locking portion at the other end of the helical track and limited and stopped by the locking portion. In this manner, the shaft locking member can disengage from or be embedded in the shaft locking groove.

In some examples, the cut-off saw further includes a second housing located outside the housing and accommodating at least part of the transmission assembly, and the support limiting member is fixedly mounted on the second housing.

In some examples, the transmission assembly includes a long shaft connected to the motor shaft, and shaft locking grooves are disposed along the circumferential direction of the long shaft.

In some examples, a guide surface is provided between adjacent shaft locking grooves; the shaft locking member rotates upward or downward to the guide surface, slides relative to the shaft locking groove along the guide surface, and is embedded in the shaft locking groove.

### BRIEF DESCRIPTION OF THE DRAWINGS

FIG. 1 is a perspective view of a cut-off saw according to the present application from one perspective.
FIG. 2 is a perspective view of a cut-off saw according to the present application from another perspective.
FIG. 3 is a perspective view of a structure in which a heat conductive member and a heat dissipation member in the cut-off saw shown in FIG. 2 are separated.
FIG. 4 is an exploded view of a cut-off saw according to the present application.
FIG. 5 is a perspective view of an electric motor, a transmission assembly, an output shaft, and a shaft locking assembly in a cut-off saw according to the present application.
FIG. 6 is a plan view of the shaft locking assembly in the cut-off saw shown in FIG. 5 in an unlocking state.
FIG. 7 is a plan view of the shaft locking assembly in the cut-off saw shown in FIG. 5 in a locking state.
FIG. 8 is a left side view of a cut-off saw according to the present application.
FIG. 9 is a perspective view of a cut-off saw with part of a housing removed according to the present application from one perspective.
FIG. 10 is a perspective view of a cut-off saw with part of a housing removed according to the present application from another perspective.
FIG. 11 is schematic view one illustrating the cooling airflow direction in a cut-off saw according to the present application.
FIG. 12 is schematic view two illustrating the cooling airflow direction in a cut-off saw according to the present application.
FIG. 13 is a perspective view of a structure in which part of a housing, an air guide plate, and a heat dissipation member in the cut-off saw shown in FIG. 12 are separated.
FIG. 14 is schematic view three illustrating the cooling airflow direction in a cut-off saw according to the present application.
FIG. 15 is a right side view of a cut-off saw with part of a housing removed according to the present application.
FIG. 16 is a sectional view of the cut-off saw shown in FIG. 15 taken along A-A.
FIG. 17 is a perspective view of an electric motor, a second housing, a guard, and a guard adjustment mechanism in a cut-off saw according to the present application.
FIG. 18 is an exploded view of the guard and the guard adjustment mechanism in the cut-off saw shown in FIG. 17.
FIG. 19 is a perspective view of a structure in which part of a housing, a heat dissipation member, a sealing member, and a heat conductive member in a cut-off saw are separated according to the present application.
FIG. 20 is an exploded view of a left nozzle in a cut-off saw according to the present application.
FIG. 21 is a plan view illustrating that a guard in a cut-off saw is at a first position according to the present application.
FIG. 22 is a plan view illustrating that a guard in a cut-off saw is at a second position according to the present application.
FIG. 23 is a perspective view of a battery compartment, a battery compartment cover, and a battery pack in a cut-off saw according to the present application.
FIG. 24 is a perspective view of a structure in which the battery compartment and the battery compartment cover in the cut-off saw shown in FIG. 23 are separated.
FIG. 25 is an exploded view of some structures in the battery compartment in the cut-off saw shown in FIG. 23.
FIG. 26 is a perspective view of a cut-off saw according to the present application from another perspective.
FIG. 27 is a perspective view of a battery indicator and a circuit board assembly of the cut-off saw shown in FIG. 26 with part of a housing removed.
FIG. 28 is a perspective view of the exploded structure of the battery indicator shown in FIG. 27.
FIG. 29 is a perspective view of a transfer pipe and an elastic support member in the cut-off saw shown in FIG. 26.
FIG. 30 is a perspective view of a structure in which a left nozzle, a guard, and a right nozzle in the cut-off saw shown in FIG. 26 are separated.
FIG. 31 is a perspective view of a structure in which a second housing body, a first end cover, an expansion cover, a second end cover, and a guard in the cut-off saw shown in FIG. 26 are separated.
FIG. 32 is a sectional view of a guard, an output shaft, a bearing assembly, and a second housing of the cut-off saw shown in FIG. 26.
FIG. 33 is a plan view of a hook assembly in the cut-off saw shown in FIG. 26 in a storage state.
FIG. 34 is a plan view of a hook assembly in the cut-off saw shown in FIG. 26 in a suspended state.
FIG. 35 is a perspective view of a shaft locking assembly in a locking state with part of a housing of the cut-off saw shown in FIG. 26 removed.
FIG. 36 is a perspective view of a shaft locking assembly in an unlocking state with part of a housing of the cut-off saw shown in FIG. 26 removed.
FIG. 37 is an exploded view of the shaft locking assembly shown in FIG. 35.
FIG. 38 is a sectional view of the shaft locking assembly shown in FIG. 35.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

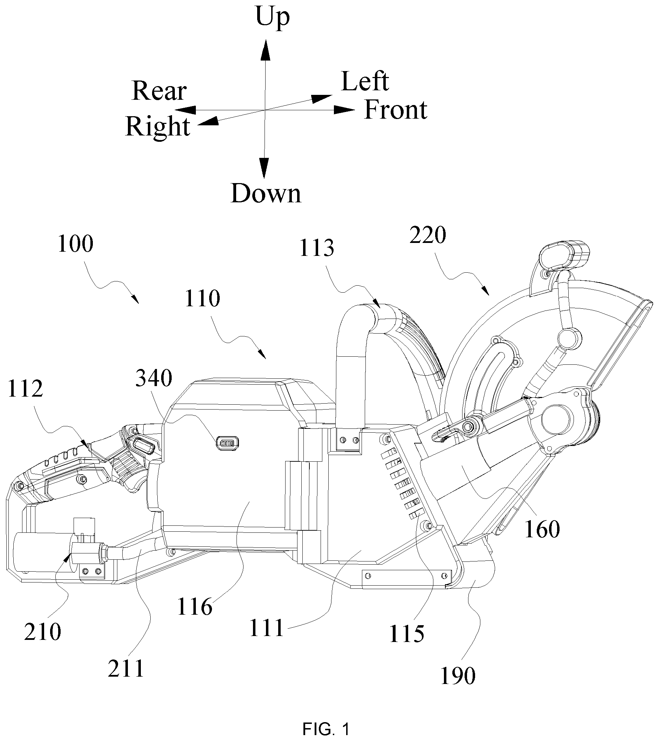

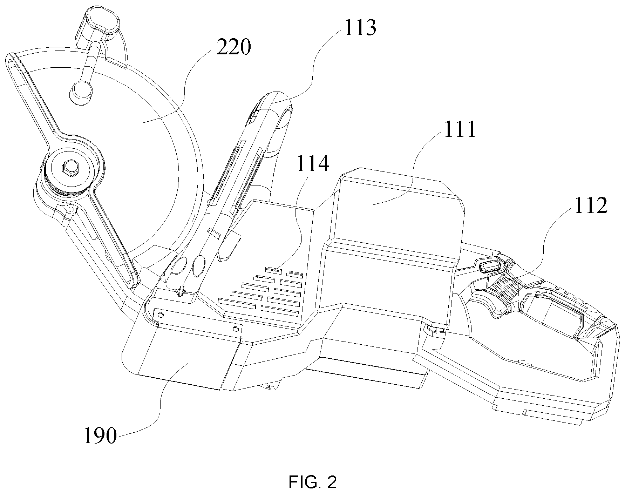

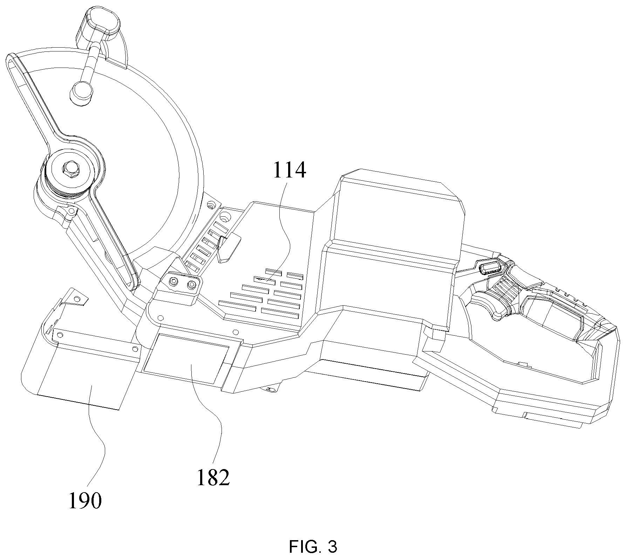

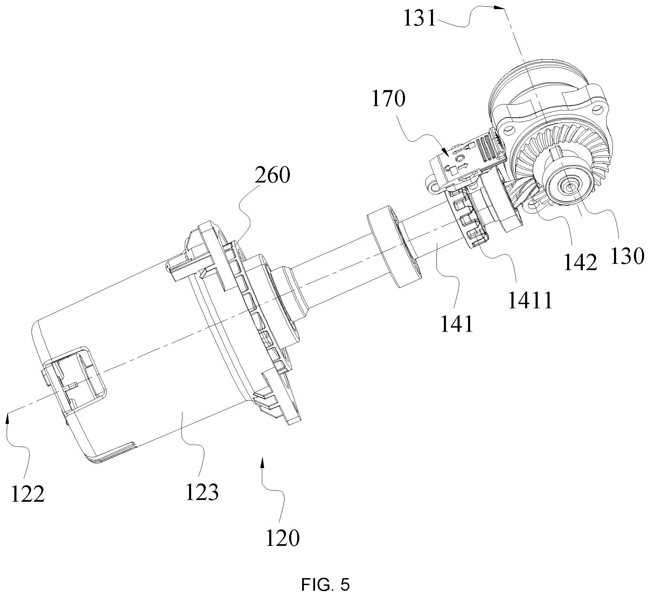

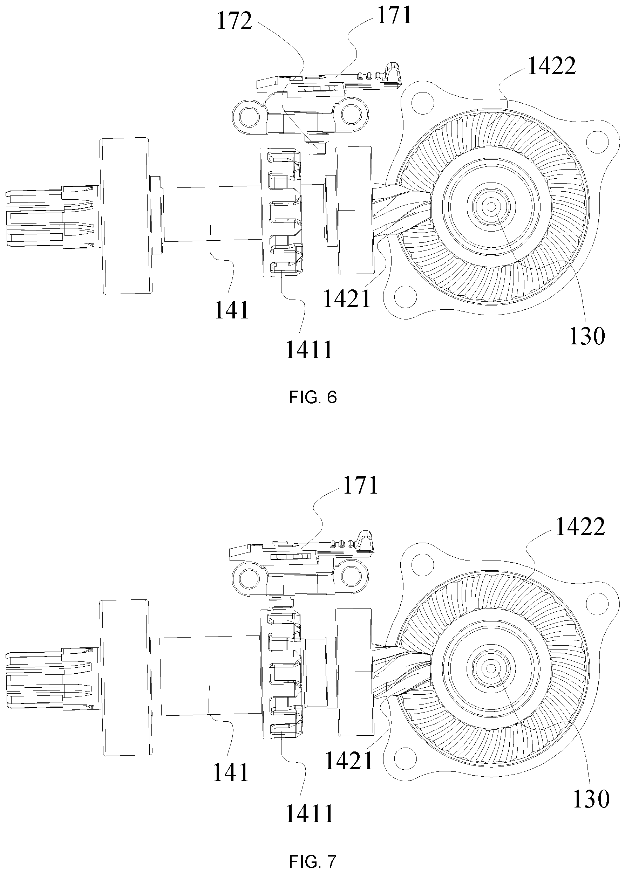

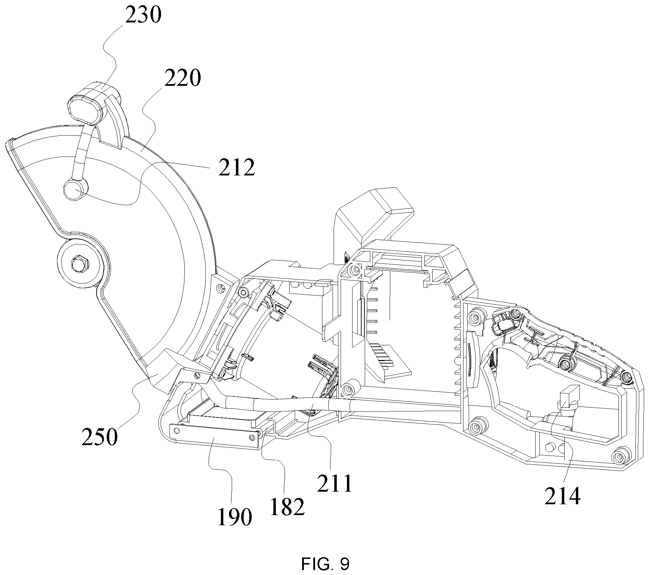

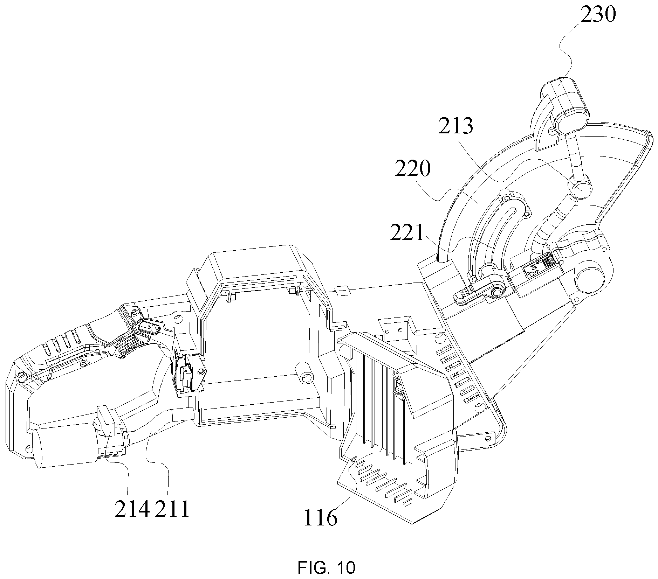

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom. Referring to FIGS. 1 to 10, the present application provides a cut-off saw 100. The cut-off saw 100 includes a housing 110, an electric motor 120, an output shaft 130, and a transmission assembly 140. The housing 110 includes a body portion 111 extending along the front and rear direction. The electric motor 120 is disposed in the body portion 111. The electric motor 120 has a motor shaft 121. The output shaft 130 is used for mounting and driving a saw blade 150. The transmission assembly 140 transmits power between the motor shaft 121 and the output shaft 130.

The housing 110 further includes a grip at least partially located behind the body portion 111. The grip includes a main handle 112 located behind the body portion 111, thereby facilitating holding. In some examples, the main handle 112 forms a through hole through which a hand can pass for holding. The grip further includes a front handle 113 disposed on the body portion 111 and located above the body portion 111. During use, the front handle 113 may be held by one hand, and the main handle 112 may be held by the other hand, thereby facilitating the operation of the cut-off saw 100.

In some examples, the housing 110 includes a left housing and a right housing, and the left housing and the right housing snap together to form the body portion 111 and the grip. In some examples, the body portion 111 is detachably connected to the grip, and the body portion 111 includes a left housing and a right housing. Of course, it is also feasible that various parts of the housing 110 may be integrally formed.

The body portion 111 has a support surface for supporting the cut-off saw 100 when the cut-off saw 100 is placed horizontally so that the cut-off saw 100 is more stable when placed horizontally. The motor shaft 121 extends along a motor axis 122, and the motor axis 122 obliquely intersects with the support surface, which is compatible with output mechanisms such as the transmission assembly 140 to be described later, thereby effectively reducing the length of the whole machine. In some examples, the included angle between the motor axis 122 and the support surface is 15° to 60°.

The output shaft 130 is located outside the housing 110. The output shaft 130 is parallel to the support surface and extends along the left and right direction of the housing 110. The output shaft 130 extends along an output axis 131, and the output axis 131 is parallel to the support surface. The output axis 131 may intersect with the motor axis 122. In some examples, the motor shaft 121 is basically perpendicular to the output shaft 130, that is, the motor axis 122 is perpendicular to the output axis 131. In some examples, an included angle exists between the motor axis 122 and the output axis 131.

The transmission assembly 140 includes a long shaft 141 and a bevel gearset 142. The long shaft 141 is connected to and collinear with the motor shaft 121. The bevel gearset 142 is connected between the long shaft 141 and the output shaft 130 to transmit power. The electric motor 120 drives the long shaft 141 to rotate and then transmits power to the output shaft 130 through the bevel gearset 142.

The bevel gearset 142 includes a first bevel gear 1421 and a second bevel gear 1422. The first bevel gear 1421 is disposed on the long shaft 141, the second bevel gear 1422 is disposed on the output shaft 130, and the first bevel gear 1421 meshes with the second bevel gear 1422. In some examples, the first bevel gear 1421 and the long shaft 141 are integrally formed.

The cut-off saw 100 further includes a second housing 160, the second housing 160 is connected to the housing 110 and is at least partially located outside the housing 110, the second housing 160 may be located between the housing 110 and the output shaft 130 or between the housing 110 and the saw blade 150, and the transmission assembly 140 is at least partially located in the second housing 160. In some examples, the second housing 160 for accommodating the transmission assembly 140 forms a gearbox and a bearing chamber. The second housing 160 is provided to facilitate assembly, replacement, and maintenance. The central axis of the second housing 160 obliquely intersects with the support surface. The second housing 160 extends along the central axis, and the central axis is parallel to the axis of the long shaft 141. In some examples, the central axis coincides with the axis of the long shaft 141.

The second housing 160 or the gearbox for accommodating the transmission assembly 140 is filled with semi-solid grease or the like for lubrication and is usually a sealed space. However, due to the influence of working conditions, such as high-power operation or high ambient temperature, the temperature and pressure in the cavity increase, and the lubricant is prone to leakage at weak sealing points. To address the preceding problem, in some examples, the second housing 160 is provided with a through hole 165 to allow the airflow and/or lubricant to flow through, and the second housing 160 is further provided with an expansion cover 164 that can cover the through hole 165. The expansion cover 164 is sealingly connected to the second housing 160, and the expansion cover 164 is elastically deformable, thereby forming a sealed space with variable volume that is impermeable to both air and oil outside the through hole 165 of the second housing 160. Therefore, in the case of an increase in temperature and/or air pressure, the gas and/or lubricant in the second housing 160 or the gearbox can enter the sealed space with variable volume formed by the expansion cover 164 and the second housing 160 from the through hole 165 so that the air pressure within the cavity is balanced with the external atmospheric pressure, and the lubricant does not leak, thereby ensuring that the cut-off saw 100 can always work smoothly. In some examples, the expansion cover 164 may be made of a soft rubber material such as rubber or silicone or may be made of other soft and elastic materials that are impermeable to both air and oil.

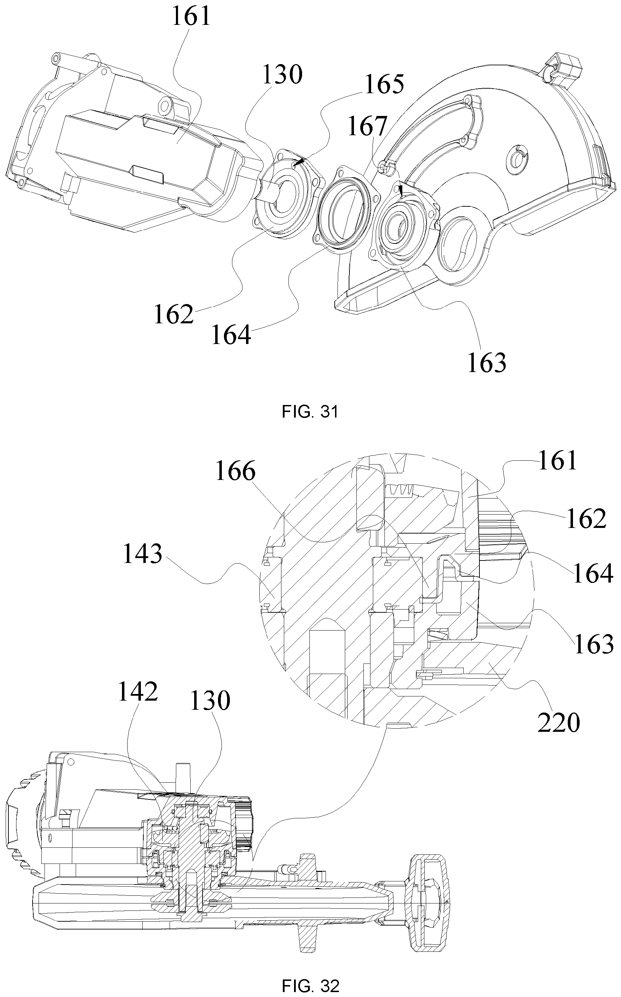

In some examples, referring to FIGS. 31 and 32, the second housing 160 includes a second housing body 161, a first end cover 162, and a second end cover 163. The first end cover 162 may be mounted to and sealingly connected to the second housing body 161, and a first accommodation space is formed between the first end cover 162 and the second housing body 161, that is, an inner cavity of the gearbox for accommodating the transmission assembly 140 is formed, and the long shaft 141 and the bevel gearset 142 may be disposed in the gearbox inner cavity. The through hole 165 may be provided on the first end cover 162, and the expansion cover 164 may cover the through hole 165 and be sealingly connected to the first end cover 162. The second end cover 163 may be mounted to the first end cover 162, and a second accommodation space is formed between the second end cover 163 and the first end cover 162. In some examples, the second accommodation space may accommodate at least a bearing assembly for supporting the output shaft 130, that is, an inner cavity of the bearing chamber for accommodating the bearing assembly of the output shaft 130 is formed.

The first end cover 162 and the second end cover 163 are located between the second housing body 161 and a guard 220, and the second end cover 163 is closer to the guard 220. The first end cover 162 and the second end cover 163 are each provided with a through hole for the output shaft 130 to pass through. The output shaft 130 may be connected to the second bevel gear 1422 in the inner cavity of the gearbox, pass through the inner cavity of the gearbox and the inner cavity of the bearing chamber in sequence via the through holes on the first end cover 162 and the second end cover 163, and then enter the guard 220 so that the saw blade 150 can be mounted on the output shaft 130, and the output shaft 130 can drive the saw blade 150.

The expansion cover 164 may be disposed in the second accommodation space formed between the first end cover 162 and the second end cover 163. In some examples, as shown in FIG. 32, a docking portion 166 of the first end cover 162 and a docking portion 166 of the second end cover 163 are opposite to each other and used for clamping and fixing the expansion cover 164. When the second end cover 163 is mounted on the first end cover 162, the docking portions 166 clamp the expansion cover 164 therebetween. Moreover, the docking portions 166 further divide the second accommodation space formed between the first end cover 162 and the second end cover 163 into a space that accommodates the bearing assembly and does not need to connect with the outside or the gearbox and a space for accommodating the expansion cover 164 and connecting with the outside and the gearbox. The space for accommodating the expansion cover 164 and connecting with the outside and the gearbox, that is, the space where the expansion cover 164 is located, is partitioned by the expansion cover 164, a side of the expansion cover 164 and the first end cover 162 form a sealed space that connects with the gearbox and is opened only to the through hole 165 on the first end cover 162 through which the air/oil flows, and the other side of the expansion cover 164, the second end cover 163, and an opening 167 on the second end cover 163 form an open space connecting with the outside.

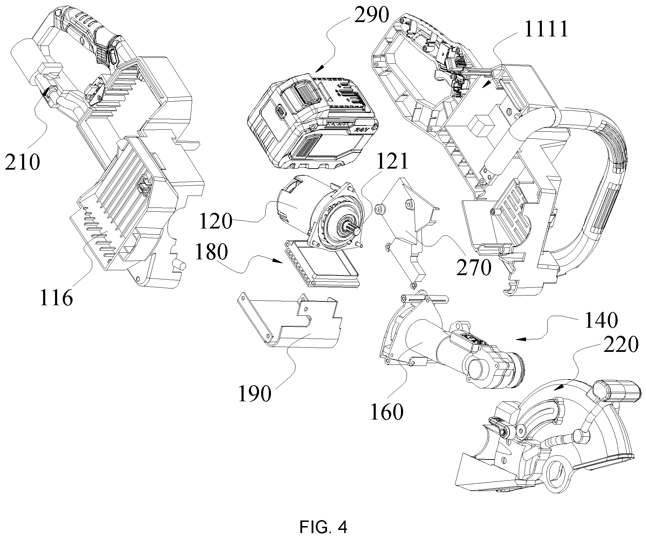

Referring to FIGS. 4 to 7, the cut-off saw 100 further includes a shaft locking assembly 170 disposed on the second housing 160, and the shaft locking assembly 170 includes an operating member 171 and a shaft locking member 172 connected to each other. Shaft locking grooves 1411 are circumferentially disposed on the long shaft 141. The shaft locking member 172 may be embedded in the shaft locking groove 1411. The shaft locking grooves 1411 extend along a direction parallel to the long shaft 141. In some examples, the shaft locking grooves 1411 are disposed on a component sleeved on the long shaft 141, and the operating member 171 is operated by the user to push the operating member 171 and the shaft locking member 172 along the direction parallel to the long shaft 141 so that the shaft locking member 172 is embedded in the shaft locking groove 1411, thereby locking the rotation of the output shaft 130.

The shaft locking assembly 170 has an unlocking state and a locking state. In the locking state, the output shaft 130 may be locked by the shaft locking assembly 170 so that the transmission assembly 140 does not rotate with the saw blade, thereby facilitating the installation and removal of the saw blade; and the saw blade 150 not in use can be prevented from rotating due to inadvertent contact, thereby ensuring safety. The operating member 171 is of a push type. The operating member 171 can cause the shaft locking member 172 to be embedded in the shaft locking groove 1411 so that the rotation of the long shaft 141 can be locked, thereby further locking the rotation of the output shaft 130. The direction along which the operating member 171 is pushed is parallel to the long shaft 141. When the cut-off saw 100 is used, the shaft locking assembly 170 can be switched to the unlocking state by pushing the operating member 171, which is easy to operate.

The operating member 171 at least partially protrudes from the second housing 160 so that the user can operate the shaft locking assembly 170 easily. The second housing 160 is provided with an avoidance opening for the operating member 171 to extend out. The operating member 171 is elastically connected to the second housing 160. The operating member 171 is slidable along a direction parallel to the long shaft 141. The avoidance opening extends along the direction of the long shaft 141. The operating member 171 is provided with a protrusion that protrudes out of the housing 110 through the avoidance opening. The protrusion is provided so that the user can easily push the operating member 171.

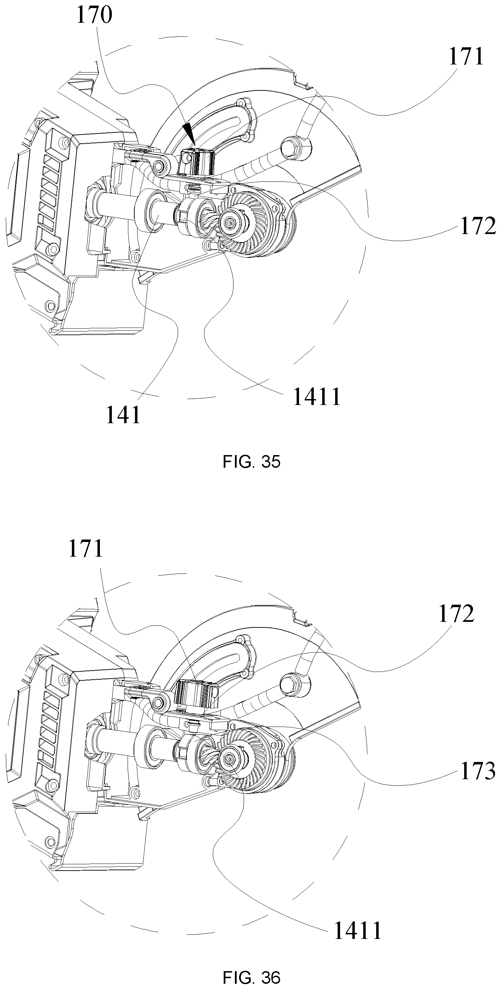

Referring to FIGS. 35 to 38, another alternative example of the shaft locking assembly 170 is provided. As shown in FIG. 35, similar to the above, the shaft locking assembly 170 includes the shaft locking member 172 that can be embedded in the shaft locking groove 1411 to lock the rotation of the output shaft 130. For example, the shaft locking grooves 1411 may be connected to or formed on the long shaft 141 of the transmission assembly 140. Specifically, a shaft locking disc on which the shaft locking grooves 1411 are provided may be sleeved on the long shaft 141. Of course, in other examples, the shaft locking grooves 1411 may be directly disposed on the motor shaft 121 or the output shaft 130. The shaft locking assembly 170 further includes a support limiting member 173 and an elastic member 174. The elastic member 174 abuts against the shaft locking member 172, and the shaft locking member 172 always tends to be embedded in the shaft locking groove 1411 due to the elastic deformation of the elastic member 174. For example, the elastic member 174 may be a spring that is always in a compressed state or a stretched state, and an end of the elastic member 174 is fixed. The shaft locking member 172 rotates upward or downward under the constraint of the support limiting member 173 and the drive of the elastic member 174 to disengage from or be embedded in the shaft locking groove 1411, thereby achieving the switching of the shaft locking assembly 170 between the unlocking state and the locking state.

In this example, the operating member 171 may be of a rotary type and may be connected to or formed on the shaft locking member 172. The operating member 171 rotates to switch between an unlocking position and a locking position, and the shaft locking assembly 170 may convert the rotation of the operating member 171 into the rotational ascent or descent of the shaft locking member 172. When the operating member 171 rotates to the unlocking position, the shaft locking assembly 170 is in the unlocking state, and the shaft locking member 172 disengages from the shaft locking groove 1411. When the operating member 171 rotates to the locking position, the shaft locking assembly 170 is in the locking state, and the shaft locking member 172 is embedded in the shaft locking groove 1411. In some examples, the operating member 171 may be disposed on the second housing 160. In some examples, the rotation axis of the operating member 171 is collinear with or parallel to the rotation axis of the shaft locking member 172.

May possible connection relationships exist between the operating member 171, the shaft locking member 172, and the support limiting member 173. In some examples, the support limiting member 173 is fixedly connected to the second housing 172, the operating member 171 is fixedly connected to the shaft locking member 172, and the operating member 171 and the shaft locking member 172 are movably connected to the support limiting member 173 and the second housing 160 and can rotate and translate relative to the support limiting member 173 and the second housing 160. The following mainly provides an illustrative description of this example. In some other examples, the operating member 171 may be non-fixedly connected to the shaft locking member 172, and an intermediate piece may exist between the operating member 171 and the shaft locking member 172, as long as the rotation of the operating member 171 can be converted into the rotational ascent or descent of the shaft locking member 172. In some other examples, the operating member 171 may be fixedly connected to the support limiting member 173, and the operating member 171 and the support limiting member 173 are movably connected to the shaft locking member 172 and the second housing 160, can rotate and translate relative to the shaft locking member 172, and can rotate relative to the second housing 160.

In some examples, the support limiting member 173 has a helical track 1731 along the circumferential direction of the shaft locking member 172, and the shaft locking member 172 is connected to or formed with a mating portion 1721 that is constrained by the helical track 1731 and is movable along the helical track 1731. The movement of the mating portion 1721 drives the shaft locking member 172 to rotate upward or downward. In some examples, the shaft locking member 172 is provided with the mating portion 1721 that protrudes along the radial direction. For example, a mating pin may be inserted into the shaft locking member 172 along the radial direction and used as the mating portion 1721. The support limiting member 173 may be sleeved on the outside of the shaft locking member 172 and may have an inclined surface along the circumferential direction that can abut against the mating pin. It is to be understood that the helical track is not strictly required to be disposed along a helical line in the circumferential direction of the support limiting member 173, as long as the helical track can roughly allow the corresponding circumferential and axial movements of the shaft locking member 172 when the shaft locking member 172 rotates and translates. In some examples, the support limiting member 173 is at least partially accommodated in the operating member 171. Specifically, the operating member 171 is provided with an accommodation groove facing the shaft locking member 172 and the support limiting member 173, an end of the operating member 171 and/or the shaft locking member 172 may be partially extended into the accommodation groove, and the helical track 1731 may be at least partially accommodated in the accommodation groove.

In some examples, locking portions 1732 are provided at two ends of the helical track 1731 of the support limiting member 173. When the mating portion 1721 moves to one of the two ends of the helical track 1731, the mating portion 1721 is limited by the locking portion 1732 and stopped at the position, thereby maintaining the shaft locking assembly 170 in the locking state or the unlocking state. In some examples, the locking portion 1732 includes a locking groove disposed at any end of the helical track 1731, and the mating portion 1721 falls into the groove to achieve selflocking. The locking portion 1732 may also include a blocking wall disposed at an end of the helical track 1731 reached by the mating portion 1721 under the drive of the elastic member 174.

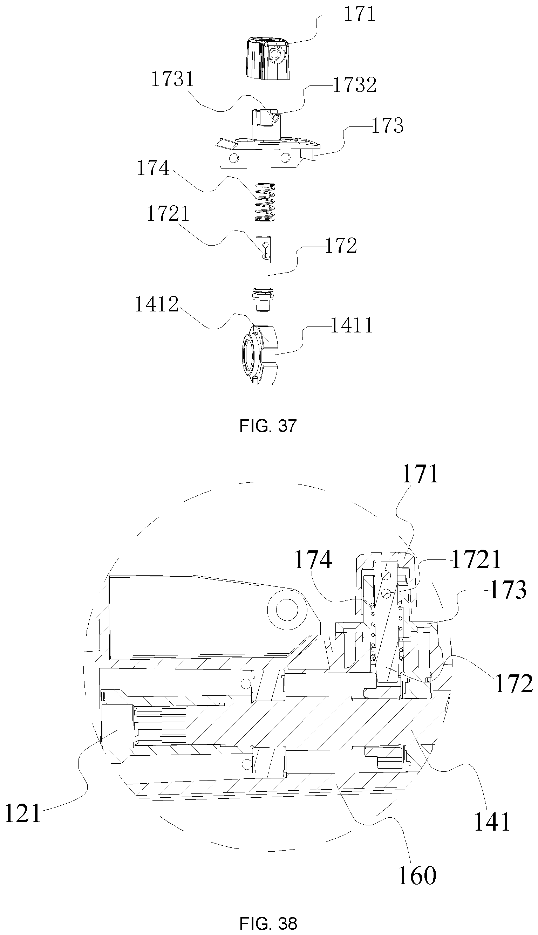

As shown in FIGS. 37 and 38, the support limiting member 173 is fixedly mounted on the second housing 160, and the shaft locking member 172 is in the shape of a rod, penetrates the support limiting member 173, and then extends into the second housing 160 to act on the shaft locking groove 1411. The operating member 171 is in the shape of a cap, is sleeved on an end of the support limiting member 173 facing away from the shaft locking grooves 1411, and is fixedly connected to the shaft locking member 172. The elastic member 174 sleeved on the shaft locking member 172 is always in the compressed state, an end of the elastic member 174 facing away from the shaft locking grooves 1411 is fixed, and the other end of the elastic member 174 abuts against the shaft locking member 172. The shaft locking member 172 driven by the elastic member 174 rotates upward or downward since the pin-shaped mating portion 1721 extending radially from the shaft locking member 172 is constrained in the circumferential direction by the helical track 1731. When the operating member 171 is rotated from the unlocking position to the locking position, the external force for rotating the operating member 171 causes the mating portion 1721 that is on the shaft locking member 172 fixedly connected to the operating member 171, originally falls into the locking groove 1732 at an end of the helical track 1731, and is in the selflocking state to be driven out of the locking groove 1732 and disengage from the selflocking state, and under the drive of the elastic member 174 and the constraint of the helical track 1731 on the mating portion 1721 against which the helical track 1731 abuts, the shaft locking member 172 rotates downward and is embedded in the shaft locking groove 1411 below until the mating portion 1721 reaches the other end of the helical track 1731, is limited by the blocking wall 1732, and cannot move further. In this manner, the shaft locking assembly 170 is maintained in the locking state.

When the operating member 171 is rotated from the locking position to the unlocking position, the external force for rotating the operating member 171 causes the shaft locking member 172 fixedly connected to the operating member 171 to overcome the drive of the elastic member 174, the blocking wall 1732 originally limiting the mating portion 1721 no longer works due to the reverse movement of the mating portion 1721, and under the constraint of the helical track 1731 on the mating portion 1721 against which the helical track 1731 abuts, the shaft locking member 172 rotates upward and disengages from the shaft locking groove 1411 until the mating portion 1721 falls into the locking groove 1732 at the other end of the helical track 1731 and cannot move further. In this manner, the shaft locking assembly 170 is maintained in the unlocking state.

In some examples, a guide surface 1412 is provided between adjacent shaft locking grooves 1411. In the case where the shaft locking member 172 rotates and translates and the shaft locking groove 1411 is not exactly located above or below the shaft locking member 172, the shaft locking member 172 may rotate and translate to the guide surface 1412, slide relative to the shaft locking groove 1411 along the guide surface 1412, and finally, be embedded in the shaft locking groove 1411. Specifically, the guide surface 1412 may be an arc surface or an inclined surface between adjacent shaft locking grooves 1411, and the edge of the guide surface 1412 may be flush with the opening of the shaft locking groove 1411. The shaft locking disc is used as an example. Multiple shaft locking grooves 1411 may be provided along the radial direction toward the center of the shaft locking disk, adjacent shaft locking grooves 1411 may be spaced at equal distances or angles, and the outer circumferential surface of the shaft locking disk between the shaft locking grooves 1411 may be the guide surface 1412.

In addition to being applied to the preceding cut-off saw 100, the shaft locking assembly 170 including the operating member 171, the shaft locking member 172, the support limiting member 173, and the elastic member 174 may be applied to other types of power tools. The shaft locking grooves are provided on the motor shaft, the output shaft, or the transmission assembly, and the shaft locking assembly 170 can lock and release the output shaft in the manner described above.

A bearing is disposed between the long shaft 141 and the second housing 160, and the bearing supports the long shaft 141. The second housing 160 is provided with a bearing chamber for mounting the bearing. The second housing 160 may be a split structure, thereby facilitating the installation of the transmission assembly 140 and the output shaft 130. A bearing is disposed between the output shaft 130 and the second housing 160, and the bearing supports the output shaft 130.

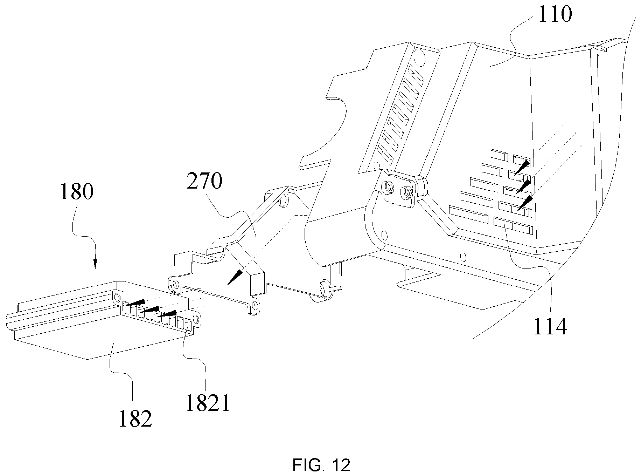

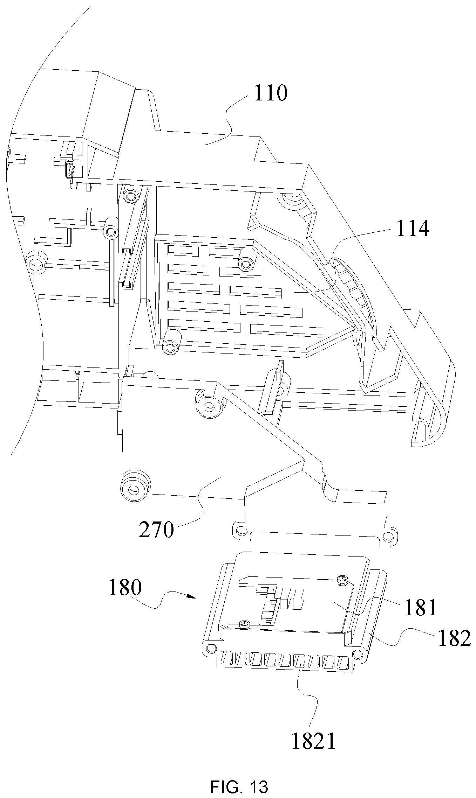

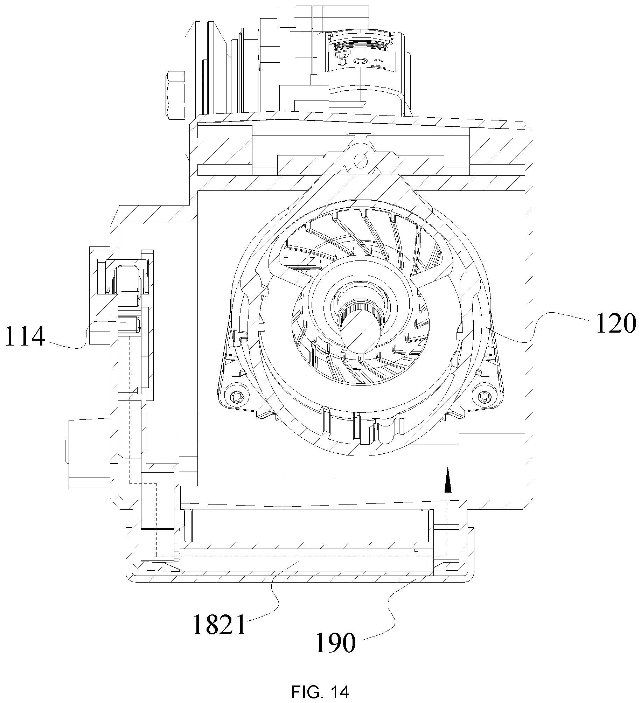

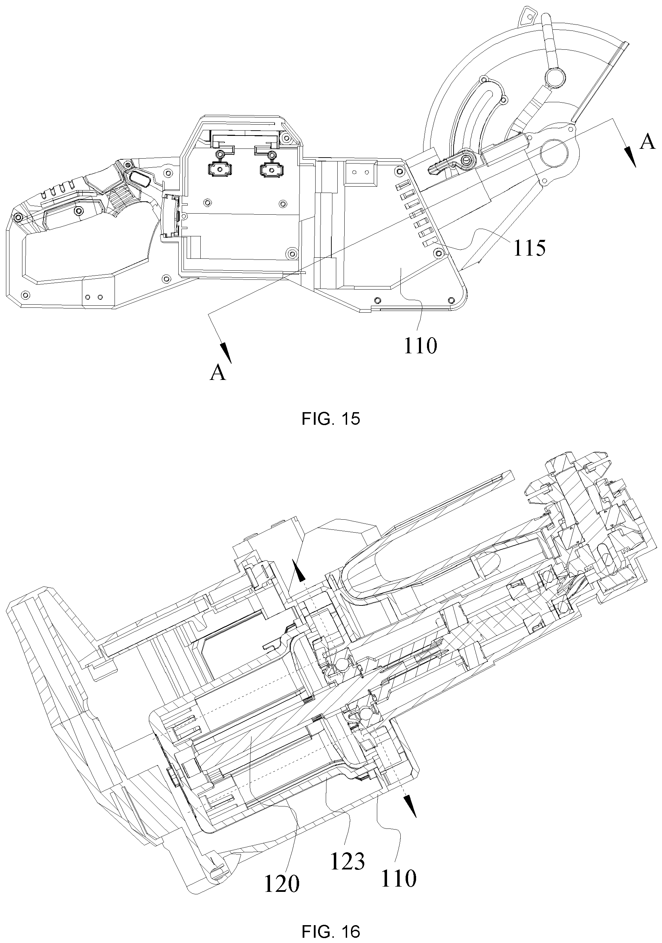

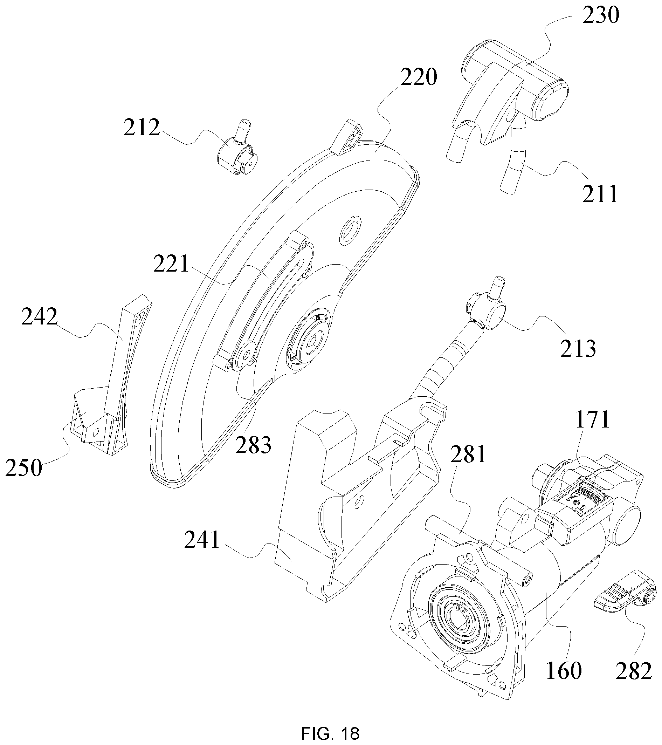

Referring to FIGS. 1 to 5 and FIGS. 8 to 20, the cut-off saw 100 further includes a circuit board assembly 180. The circuit board assembly 180 includes a circuit board 181 and a heat dissipation member 182. The circuit board 181 is connected to the heat dissipation member 182. During use, the circuit board 181 generates heat, the heat is transferred to the heat dissipation member 182, and the heat dissipation member 182 is used for physically dissipating heat for the circuit board 181. The housing 110 has an opening, and the heat dissipation member 182 is at least partially exposed relative to the housing 110 through the opening. The heat dissipation member 182 may be exposed to the outside of the housing 110 or aligned with the opening of the housing 110 so that the heat dissipation member 182 can be in contact with the external space for heat exchange, thereby achieving natural heat dissipation and improving the heat dissipation effect.

The circuit board 181 is disposed on a side of the heat dissipation member 182, and the circuit board 181 and the heat dissipation member 182 are in surface contact with each other, thereby increasing the contact area and improving the heat dissipation effect. In some examples, the heat dissipation member 182 is a heat dissipation box. In some examples, the heat dissipation member 182 is a heat sink. In some examples, the heat dissipation member 182 is made of aluminum.

When the heat dissipation member 182 is a heat dissipation box, a side of the heat dissipation box facing away from the circuit board 181 has multiple heat dissipation through holes 1821, and the heat dissipation through holes 1821 penetrate the box body of the heat dissipation box along a direction parallel to a plane where the circuit board 181 is located, thereby increasing the heat dissipation area of the heat dissipation box and improving the heat dissipation efficiency. In some examples, the circuit board 181 is disposed on the top of the heat dissipation box, the heat dissipation through holes 1821 are disposed on the bottom of the heat dissipation box, and the bottom surface of the heat dissipation box is exposed to the outside of the housing 110 or aligned with the opening position of the housing 110. An accommodation cavity for accommodating the circuit board 181 is disposed on the top of the heat dissipation box.

The circuit board 181 is located below the electric motor 120, and the projection of the circuit board 181 and the projection of the electric motor 120 in the up and down direction at least partially coincide so that the space is fully utilized and the layout is reasonable.

The cut-off saw 100 further includes a heat conductive member 190 connected to the housing 110. The heat conductive member 190 is at least partially located outside the housing 110. The heat dissipation member 182 is at least partially exposed relative to the housing 110 through the opening and is in thermal contact with the heat conductive member 190. The heat from the heat dissipation member 182 can be transferred to the heat conductive member 190, and the heat conductive member 190 is in contact with the external space for heat exchange, thereby achieving natural heat dissipation and further improving the heat dissipation effect.

In some examples, the opening is located on a front bottom surface of the housing 110, the heat conductive member 190 is connected to the housing 110 around the opening and has a heat conductive plane covering the opening, and the heat dissipation member 182 is in contact with the heat conductive plane. Through surface-to-surface contact, the contact area between the heat dissipation member 182 and the heat conductive member 190 can be increased, thereby increasing the heat conduction area efficiency and improving the heat dissipation effect.

The heat conductive member 190 is a wear-resistant metal member to improve the heat dissipation effect. In some examples, the heat conductive member 190 is bent into a U-shape or a V-shape so that the heat conductive member 190 can be in contact with the housing 110. The edges of the heat conductive member 190 are bent to cover the periphery of the opening of the housing 110. In some examples, the heat conductive member 190 covers the junction between the bottom and the front of the body portion 111. The heat conductive member 190 and the housing 110 may be connected via screws. In some examples, the heat conductive member 190 is made of a nickel-iron alloy.

The heat conductive member 190 not only plays a role in heat conduction but also has a supporting function. The bottom surface of the heat conductive member 190 forms or supports the support surface so that the cut-off saw 100 can be supported when placed horizontally. The heat conductive member 190 is configured to be the wear-resistant metal member, thereby reducing wear and ensuring the heat dissipation and supporting effects.

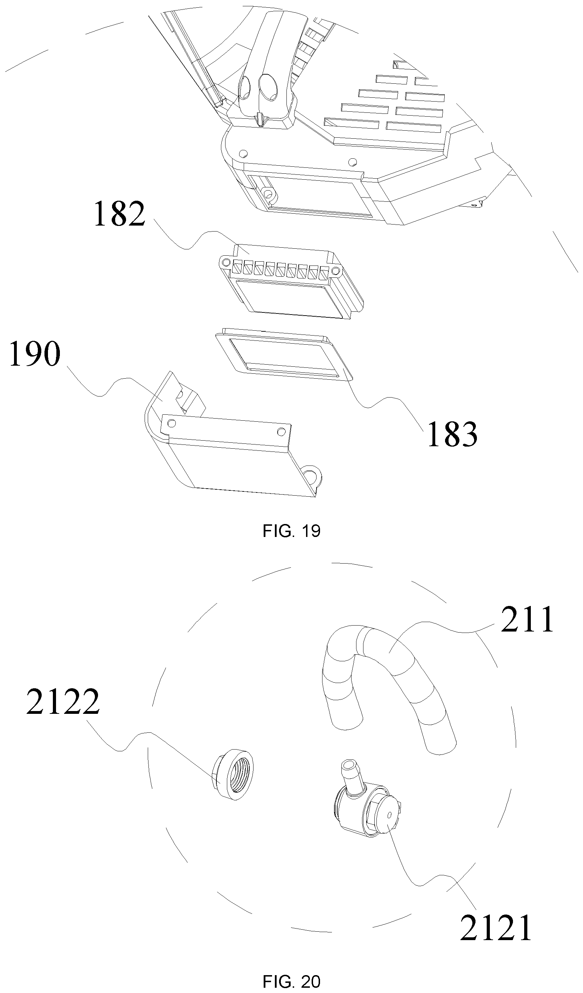

The cut-off saw 100 further includes a sealing member 183 disposed around the opening and filling the gaps between the housing 110, the heat dissipation member 182, and the heat conductive member 190. The sealing member 183 is used for preventing water from entering the housing 110. The sealing member may be a sealing ring, a sealing strip, or another sealing structure. As shown in FIG. 19, the sealing member 183 is a sealing ring that is made of rubber material, is sleeved on the bottom of the heat dissipation box, and completely fills the gap between the heat dissipation box and the bottom opening of the housing 110. The sealing member 183 further has positioning and protective edges that extend a certain length along the outer periphery of the heat conductive plane.

In some examples, the heat conductive member 190, the heat dissipation member 182, and the second housing 160 are connected; the heat dissipation member 182, the heat conductive member 190, the second housing 160, and the saw blade 150 are all made of conductive materials, and the static electricity generated in a cutting process is transferred to the saw blade 150 through the heat dissipation member 182, the heat conductive member 190, and the second housing 160 and then released to the ground. In some examples, the heat conductive member 190 is fixedly connected to the housing 110, and the connection between the heat conductive member 190 and the second housing 160 may be abutting or overlapping, thereby facilitating the transfer of static electricity. In some examples, any two of the heat dissipation member 182, the heat conductive member 190, the second housing 160, and the saw blade 150 may be connected using screws or bolts made of conductive materials.

In the cut-off saw 100 provided in the present application, not only is heat dissipated through the contact between the heat dissipation member 182 and the heat conductive member 190, but heat is also dissipated by spraying coolant onto the saw blade 150, thereby combining natural heat dissipation and water-cooling heat dissipation to improve the heat dissipation effect.

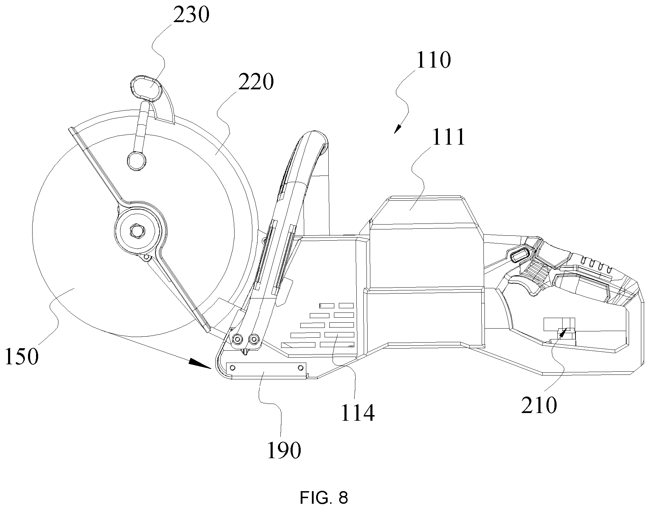

The cut-off saw 100 further includes a liquid cooling system 210. The liquid cooling system 210 sprays coolant onto the saw blade 150 when the saw blade 150 is cutting. The coolant moves through the heat conductive member 190 after leaving the saw blade 150. By spraying coolant onto the heat conductive member 190 to cool the heat conductive member 190, natural heat dissipation is combined with water-cooling heat dissipation, thereby further improving the heat dissipation effect of the heat conductive member 190 on the circuit board 181 and the like. Normally, the saw blade 150 rotates counterclockwise. When the saw blade 150 rotates, the coolant sprayed by the liquid cooling system 210 is driven by the rotating saw blade 150 and is basically thrown out from the bottom of the saw blade 150 along the tangential direction of the saw blade 150. The coolant flow is sprayed toward the heat conductive member 190 by inertia. The arrow direction in FIG. 8 shows the spraying direction of part of the coolant.

The liquid cooling system 210 includes a transfer pipe 211 for transmitting coolant. A groove for the transfer pipe 211 to pass through is formed at the bottom inside the housing 110, and an extension path of the transfer pipe 211 and the housing 110 are in contact around the periphery of the circuit board assembly 180. The flow of the coolant in the transfer pipe 211 takes away part of the heat from the circuit board 181, thereby further improving the water-cooling heat dissipation effect. Part of the transfer pipe 211 can be squeezed into the groove in the housing 110, and part of the transfer pipe 211 can be limited by a snap catch or clamp so that the position of the transfer pipe 211 is stable.

The projection of the transfer pipe 211 and the projection of the circuit board 181 in the up and down direction at least partially coincide; and/or the projection of the transfer pipe 211 and the projection of the heat dissipation member 182 in the up and down direction at least partially coincide. While heat is dissipated, the space is fully utilized, the structure is compact, and the layout is reasonable. In some examples, the transfer pipe 211 is disposed above the circuit board 181. In some examples, the projection of the transfer pipe 211 does not overlap with the projection of the circuit board 181 in the up and down direction, so as to decrease the safety risk to the circuit board assembly 180 for the moisture bringing by the transfer pipe 211.

One of the benefits of the present application is described below. The housing has the opening, the heat dissipation member is at least partially exposed relative to the housing through the opening and is in thermal contact with the heat conductive member, the heat dissipation member connected to the circuit board in the cut-off saw may be in contact with the space outside the housing and dissipate heat through the opening on the housing, and the heat dissipation member can be in thermal contact with the heat conductive member to transfer heat to the heat conductive member outside the housing, thereby having an excellent heat dissipation effect.

The cut-off saw 100 further includes the guard 220, and the saw blade 150 is partially accommodated in the guard 220. The liquid cooling system 210 includes a left nozzle 212 and a right nozzle 213, the left nozzle 212 is disposed on the left end surface of the guard 220, the right nozzle 213 is disposed on the right end surface of the guard 220, and the left nozzle 212 and the right nozzle 213 penetrate the guard 220 to output the coolant. Of course, the liquid cooling system 210 of the cut-off saw 100 can use a single nozzle to cool down the saw blade 150. The examples described below can also be used in cut-off saw with single nozzle.

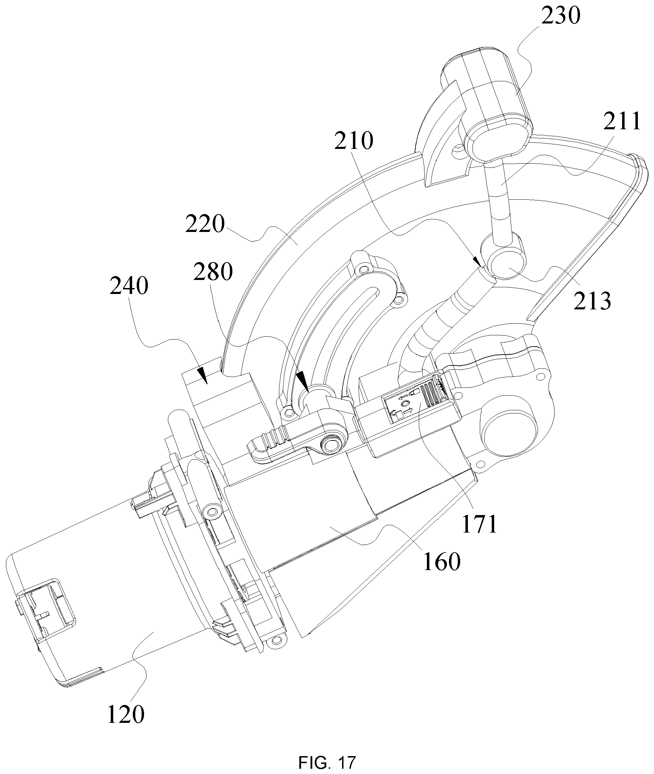

In some examples, as shown in FIGS. 17 to 20 and FIG. 30, the left nozzle 212 may include a first member 2121 and a second member 2122, and the first member 2121 is connected to the guard 220. For example, first members 2121 may be connected to the left and right end surfaces of the guard 220 through snap grooves, a through hole penetrating the guard 220 exists, and the transfer pipe 211 may be connected to the first members 2121 to connect with the through hole and then output the coolant. For example, the first member 2121 has a protrusion on which the transfer pipe 211 is sleeved, and the protrusion is internally penetrated and connected to the through hole. In some examples, the installation of the first member 2121 and the guard 220 features a foolproof design to ensure the correct installation position. The second member 2122 is detachably connected to the first member 2121. When the second member 2122 is mounted to the first member 2121, an end of the through hole facing away from the saw blade 150 is blocked and closed by the second member 2122. When the second member 2122 is disassembled from the first member 2121, the end of the through hole facing away from the saw blade 150 is opened to the outside. As shown in FIG. 20, the first member 2121 has a through hole that is collinear with the output shaft 130, and the through hole has another conduction branch along the circumferential direction for the connection of the transfer pipe 211. The second member 2122 is a nut threadedly mating with the outer circumferential surface of the first member 2121. When the nut is tightened, the nut blocks and closes the end of the through hole facing away from the saw blade 150 so that the coolant from the transfer pipe 211 is sprayed unidirectionally onto the saw blade 150. After the nuts are disassembled, two ends of the through hole are opened, and the user may use needleshaped or rod-shaped parts to conveniently and effectively clean the dust that is clogged in the through hole. In some examples, the second member 2122 may be of the same model as the nut used when the saw blade 150 is mounted to the output shaft 130 so that the related accessories are more universal and less complicated. In some examples, a waterproof ring is further provided in the second member 2122 or the nut, and the contact surface between the second member 2122 and the first member 2121 and/or the contact surface between the second member 2122 and the guard 220 are sealed and waterproofed by the waterproof ring. Equivalently, in some examples, the right nozzle 213 may also include the first member and the second member. In some examples, the left nozzle 212 and the right nozzle 213 are wear-resistant and easily machinable aluminum parts.

In some examples, the transfer pipe 211 extends from the front end of the housing 110, passes through the gap between the second housing 160 and the guard 220, crosses over the guard 220, and is connected to the left nozzle 212 and the right nozzle 213. The transfer pipe 211 and the second housing 160 are fixedly connected, for example, by screws.

The guard 220 is provided with a guard handle 230 for the user to operate to rotate the guard 220. When the transfer pipe 211 crosses over the guard 220, the transfer pipe 211 is limited by the guard handle 230. The guard handle 230 and the guard 220 may be locked by screws. In some examples, the transfer pipe 211 is sandwiched between the guard 220 and the guard handle 230. In some examples, the transfer pipe 211 passes through the guard handle 230.

The cut-off saw 100 further includes a support guide member 240. The support guide member 240 has a support portion 241 located between the second housing 160 and the guard 220. The transfer pipe 211 passes through the support portion 241 and is limited by the support portion 241. In some examples, the support portion 241 is provided with a groove for the transfer pipe 211 to pass through. In some examples, the support portion 241 is provided with a pipe for the transfer pipe 211 to pass through. The support guide member 240 and the guard 220 may be locked by screws.

The support guide member 240 further has a guide groove located behind the guard 220, and part of the guard 220 is inserted into the guide groove, thereby supporting and guiding the guard 220 without affecting the rotation of the guard 220. In some examples, the support guide member 240 is a split structure to facilitate installation and disassembly. The support guide member 240 includes the support portion 241 and a guide portion 242. The support portion 241 and the guide portion 242 are disposed on the left and right sides of the guard 220. The support portion 241 and the guide portion 242 snap together to form the guide groove. The support portion 241 and the guide portion 242 may be threadedly connected to the guard 220.

A splash guard 250 is disposed at the bottom of the guard 220. The liquid cooling system 210 sprays coolant onto the saw blade 150 when the saw blade 150 is cutting. The splash guard 250 can reduce water splashing and prevent water from entering the housing 110. The splash guard 250 and the guard 220 may be locked by screws. The splash guard 250 and the guide portion 242 may be integrally formed to facilitate machining and production.

The second housing 160 is located in front of the housing 110, and the guard 220 is located in front of the housing 110. The second housing 160 and the guard 220 are arranged along the left and right direction, the support guide member 240 is sandwiched between the second housing 160 and the guard 220, and the second housing 160, the support guide member 240, and the guard 220 are connected to increase the structural strength.

In some examples, the liquid cooling system 210 further includes a liquid inlet valve 214. The transfer pipe 211 is used for transferring the coolant, and the liquid inlet valve 214 is disposed on the transfer pipe 211. The liquid inlet valve 214 is located outside the housing 110, making it convenient for the user to operate. In some examples, the liquid inlet valve 214 is disposed on the rear side of the grip, and the user may operate the liquid inlet valve 214 when holding the grip. Based on the above, the grip includes the main handle 112 located behind the body portion 111. In some examples, the liquid inlet valve 214 may be disposed on the lower right side of the main handle 112 and may be directly connected to a water inlet.

In some examples, the flow rate of the coolant in the transfer pipe 211 is a constant value, and the liquid inlet valve 214 acts as a switch. In some examples, the liquid inlet valve 214 adjusts the flow rate of the coolant in the transfer pipe 211. The liquid inlet valve 214 and the housing 110 may be fixed by screws. In some examples, the liquid inlet valve 214 is a rotary ball valve, and the valve hole opening of the liquid inlet valve 214 is adjustable, thereby adjusting the flow rate of the coolant in the transfer pipe 211.

The cut-off saw 100 provided in the present application further utilizes air cooling for heat dissipation. The cut-off saw 100 further includes a fan 260 mounted on the motor shaft 121. The housing 110 has an air inlet 114 and an air outlet 115. The cooling airflow enters the housing 110 from the air inlet 114, flows through the circuit board assembly 180 and the electric motor 120 in sequence, and is discharged from the air outlet 115 while dissipating the heat from the circuit board assembly 180 and the electric motor 120.

When the cooling airflow flows through the circuit board assembly 180, the cooling airflow passes through the heat dissipation member 182 and takes away heat from the heat dissipation member 182. In some examples, the heat dissipation member 182 is a heat dissipation box, a side of the heat dissipation box facing away from the circuit board 181 has multiple heat dissipation through holes 1821, and the heat dissipation through holes 1821 penetrate the box body of the heat dissipation box along the direction parallel to the plane where the circuit board 181 is located. By providing the heat dissipation through holes 1821 on the heat dissipation box, the heat dissipation area can be increased, the air flow rate on the heat dissipation surface can be increased, and the heat dissipation effect can be improved.

In some examples, the heat dissipation through holes 1821 extend along the left and right direction of the housing 110. In some examples, the heat dissipation through holes 1821 extend along a straight line. In some examples, the heat dissipation through holes 1821 extend along a curve, thereby extending the heat dissipation path. In some examples, the multiple heat dissipation through holes 1821 are distributed in multiple rows along the front and rear direction or the up and down direction.

In some examples, the cut-off saw 100 further includes an air guide plate 270 connected to the housing 110 and located inside the housing 110. The housing 110, the air guide plate 270, and the heat dissipation box form a first airflow channel between the air inlet 114 and the heat dissipation through holes 1821, and the cooling airflow enters the housing 110 from the air inlet 114 and passes through the first airflow channel and the heat dissipation through holes 1821 in sequence. The first airflow channel is in a basically sealed state between the air inlet 114 and the heat dissipation through holes 1821, and the air guide plate 270 guides the cooling airflow. By providing the sealed first airflow channel, negative pressure can be formed in the first airflow channel easily, thereby promoting the smooth flow of external air into the housing 110.

The shape of the air guide plate 270 may be set according to actual requirements to guide the airflow to the heat dissipation member 182. In some examples, the air guide plate 270 is stepped. The air guide plate 270 and the housing 110 may be connected by screws.

The housing 110 has the air outlet 115, and the electric motor 120 has a motor housing 123. The housing 110 and the motor housing 123 form a second airflow channel between the electric motor 120 and the air outlet 115, and the cooling airflow flows through the electric motor 120 in the motor housing 123 and is discharged from the air outlet 115 through the second airflow channel. The second airflow channel is in a basically sealed state between the electric motor 120 or the motor housing 123 and the air outlet 115. By providing the sealed second airflow channel, negative pressure can be formed in the second airflow channel easily, thereby promoting the smooth flow of external air into the motor housing 123.

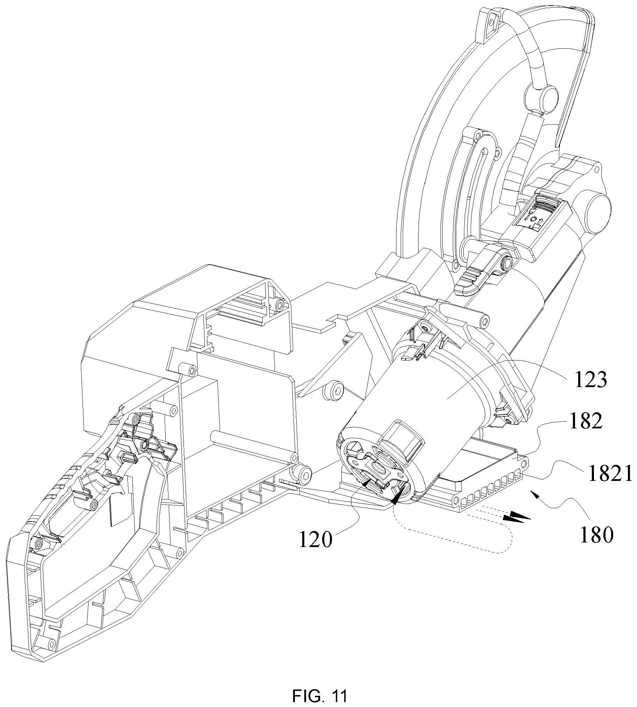

When the electric motor 120 rotates, the electric motor 120 drives the fan 260 to rotate so that negative pressure can be formed in the first airflow channel and the second airflow channel, and the external airflow enters the housing 110 from the air inlet 114, passes through the first airflow channel and the heat dissipation through holes 1821 in sequence, enters the motor housing 123, flows through the electric motor 120 in the motor housing 123, and is discharged from the air outlet 115 through the second airflow channel. The dashed arrows in FIGS. 11, 12, 14, and 16 show the airflow directions.

In some examples, the heat dissipation box is located below the electric motor 120, and the projection of the heat dissipation box and the projection of the electric motor 120 in the up and down direction at least partially coincide so that the cooling airflow passes through the heat dissipation through holes 1821 and then enters the motor housing 123 through the inner cavity of the housing 110.

In some examples, the air inlet 114 is disposed at the rear of the housing 110, and the air outlet 115 is disposed at the front of the housing 110, thereby guiding the airflow to flow from the rear to the front and extending the flow path of the cooling airflow. The cooling airflow flows through components such as the circuit board 181, the heat dissipation box, and the electric motor 120 to achieve comprehensive heat dissipation. In some examples, the air inlet 114 is located on a left wall and/or a right wall of a middle and rear part of the housing 110, and the air outlet 115 is located at the front part of the housing 110. In some examples, the air outlet 115 is located on the left wall and/or the right wall of the front part of the housing 110. In some examples, the air outlet 115 is located on the left wall and the right wall of the front part of the housing 110, and the air outlet 115 is open to two sides, thereby improving the heat dissipation effect.

In some examples, the air inlet 114 includes multiple air inlet holes spaced apart on the housing 110, thereby fully utilizing the air inlet space on the housing 110 and increasing the air inlet area. The air inlet hole is circular, elliptical, or rectangular. In some examples, the air outlet 115 includes multiple air outlet holes spaced apart on the housing 110, thereby fully utilizing the air outlet space on the housing 110 and increasing the air outlet area. The air outlet hole is circular, elliptical, or rectangular.

The air-cooling heat dissipation path is isolated from the water-cooling heat dissipation path so that the coolant for water cooling does not spray into the interior of the housing 110.

Referring to FIGS. 17 to 22, the cut-off saw 100 further includes a guard adjustment mechanism 280, and the guard 220 is connected to the second housing 160 through the guard adjustment mechanism 280. The guard adjustment mechanism 280 includes an adjustment bolt 281 and an adjustment handle 282. A rotation track 221 is disposed on a side of the guard 220 facing the second housing 160. An end of the adjustment bolt 281 is fixedly connected to the second housing 160, and the other end of the adjustment bolt 281 is rotatably connected to the guard 220 through the rotation track 221. The adjustment handle 282 releases or locks the relative rotation between the adjustment bolt 281 and the guard 220, thereby locking or releasing the relative rotation between the second housing 160 and the guard 220.

In some examples, the rotation centerline of the guard 220 coincides with the output axis 131 of the output shaft 130, and the rotation track 221 is in an arc shape around the rotation centerline to facilitate smooth rotation. The adjustment bolt 281 is threadedly connected to the second housing 160, the adjustment handle 282 is disposed at an end of the adjustment bolt 281, and the other end of the adjustment bolt 281 can abut against an elastic gasket 283 so that at least part of the elastic gasket 283 is inserted into the rotation track 221, and the guard 220 is locked using the friction between the elastic gasket 283 and the guard 220.

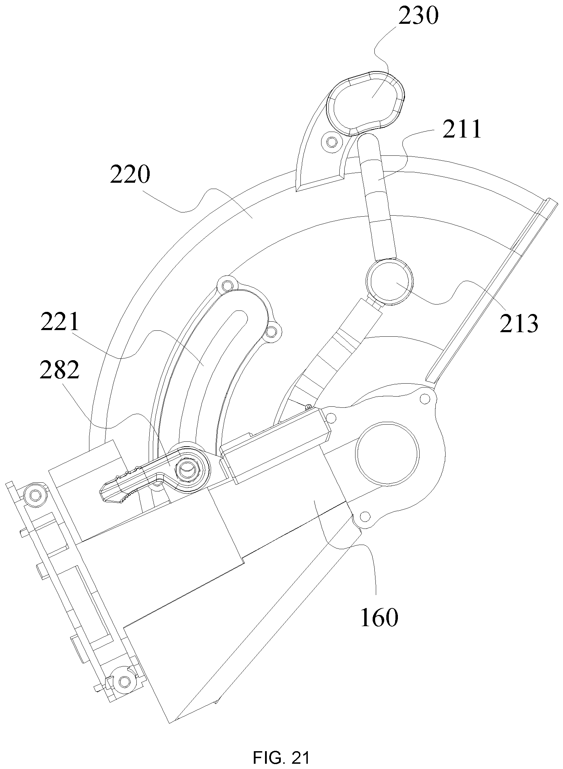

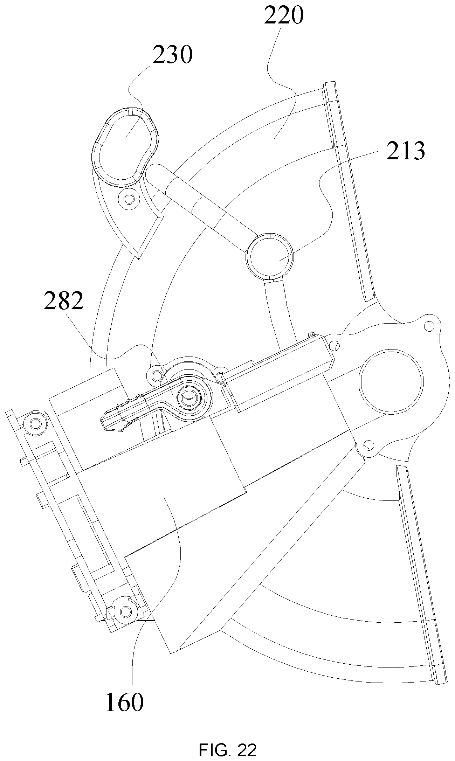

The guard adjustment mechanism 280 performs stepless adjustment on the angle of rotation of the guard 220 about the output shaft 130. The guard 220 is rotatable about the output shaft 130 within a range of 0° to 45°. FIG. 21 shows the state of the guard 220 at the first position, and FIG. 22 shows the state of the guard 220 at the second position. The guard 220 rotates from the first position to the second position by an angle of 45°.

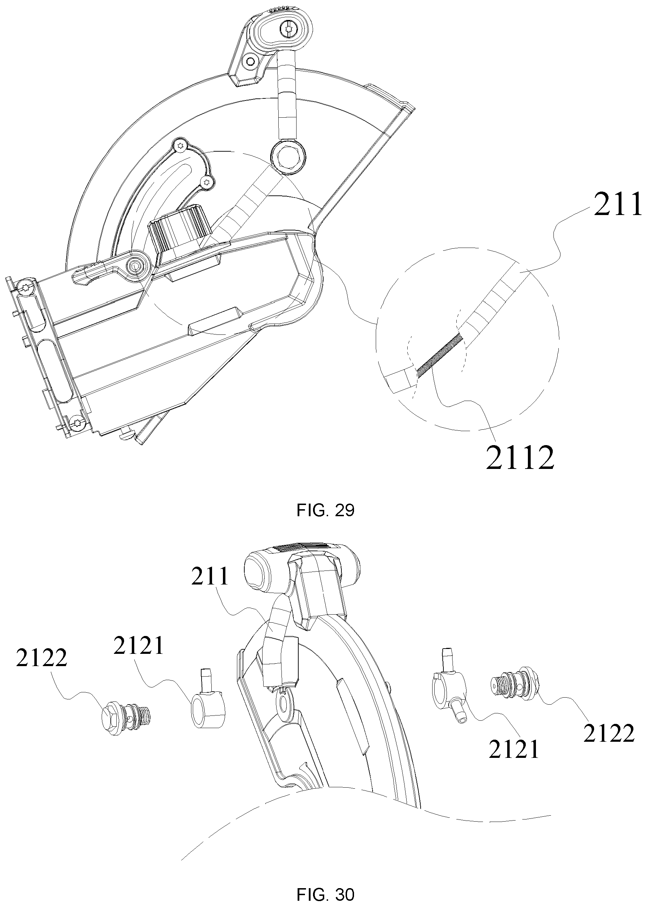

Based on the above, the transfer pipe 211 passes through the gap between the second housing 160 and the guard 220, crosses over the guard 220, and is connected to the left nozzle 212 and the right nozzle 213. The guard 220 is adjusted by the guard adjustment mechanism 280 and is rotatable about the output shaft 130 within a certain angle range. The transfer pipe 211 that is connected to one or more of the second housing 160, the guard 220, the left nozzle 212, and the right nozzle 213 may bend during the rotation of the guard 220, resulting in poor coolant flow. In some examples, as shown in FIG. 29, an elastic support member 2112 may be provided in at least part of the transfer pipe 211, thereby supporting the coolant channel space in the pipe and preventing the transfer pipe 211 from bending and blocking the coolant flow when the guard 220 rotates. Specifically, a spring is filled in at least part of the transfer pipe 211 located between the second housing 160 and the guard 220, the left nozzle 212, or the right nozzle 213.

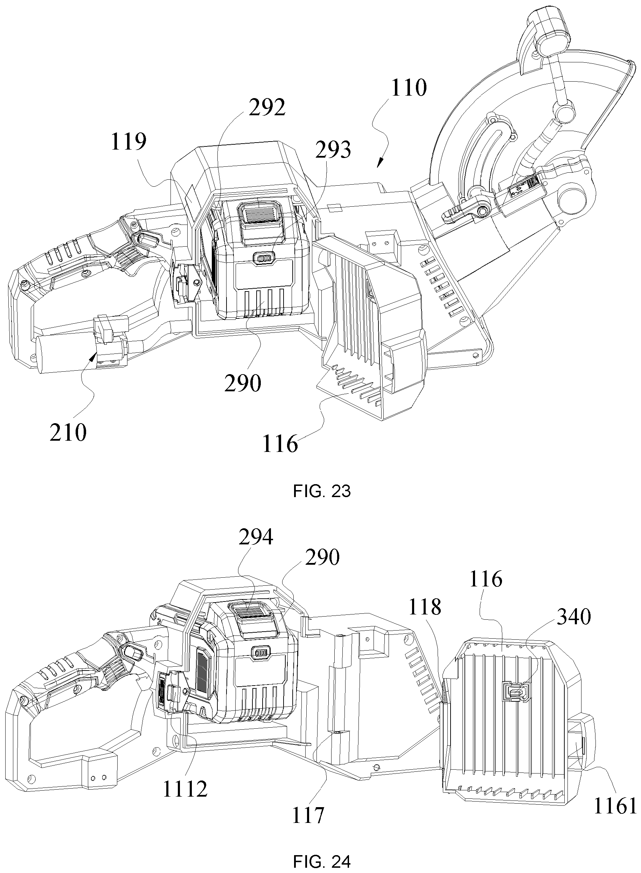

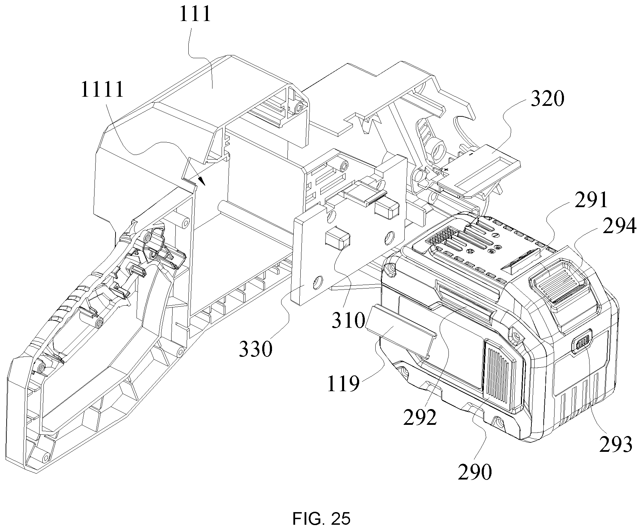

Referring to FIGS. 1 and 10 and FIGS. 23 to 25, the cut-off saw 100 further includes a battery pack 290, and the battery pack 290 supplies power to at least the electric motor 120. A battery compartment 1111 is formed inside the body portion 111 of the housing 110, and the battery compartment 1111 is used for mounting the battery pack 290. To maintain the balance of the whole machine, the electric motor 120 is located on the front side of the body portion 111, and the battery pack 290 is located on the rear side of the body portion 111. In the present application, the housing 110 of the cut-off saw 100 includes the body portion 111 and a battery compartment cover 116. By closing the battery compartment cover 116, the battery compartment 1111 that is in a sealed state and extends along the left and right direction can be formed in the body portion 111. The battery pack 290 may be coupled to the battery compartment 1111 along the left and right direction of the housing 110 to adapt to the layout of the whole machine. In some examples, the body portion 111 has a partition separating the front part where the electric motor 120 is located and the battery compartment 1111 where the battery pack 290 is located so that the front part of the body portion 111 that adopts air cooling does not affect the sealing of the battery compartment 1111.

To facilitate the replacement of the battery pack 290, the battery pack 290 and the battery compartment 1111 are detachably connected, specifically, via a snap-fit, a threaded connection, or a magnetic connection. In some examples, one of the battery pack 290 and the battery compartment 1111 is provided with a first snap catch 291, and the other one of the battery pack 290 and the battery compartment 1111 is provided with a first snap groove. The first snap catch 291 mates with the first snap groove so that the battery pack 290 can be locked to the battery compartment 1111. In some examples, the first snap catch 291 is disposed on the housing of the battery pack 290, and the first snap groove is disposed on the inner wall of the battery compartment 1111.

The cut-off saw 100 further includes a battery pack ejection mechanism 310 disposed on the inner wall of the battery compartment 1111. When the first snap catch 291 disengages from the first snap groove, at least part of the battery pack 290 pops up from the battery compartment 1111 through the battery pack ejection mechanism 310 along the insertion and removal direction.

The battery pack ejection mechanism 310 includes a ejection member which is elastic. When the battery pack 290 is mounted in the battery compartment 1111, the ejection member is compressed and deformed. When the first snap catch 291 disengages from the first snap groove, the deformation of the ejection member is restored under the action of the elastic force, thereby applying an external force to the battery pack 290 to cause the battery pack 290 to disengage from the battery compartment 1111. In this manner, at least part of the battery pack 290 pops up from the battery compartment 1111, thereby facilitating the removal of the battery pack 290.

The battery pack 290 includes a third operating member 294, and the first snap catch 291 can disengage from the first snap groove by pressing the third operating member 294. When the battery pack 290 is disassembled, the third operating member 294 may be pressed to disengage the first snap catch 291 from the first snap groove, and the deformation of the ejection member is restored under the action of the elastic force, thereby applying an external force to the battery pack 290 to cause the battery pack 290 to disengage from the battery compartment 1111. When the battery pack 290 and the battery compartment 1111 are locked, the third operating member 294 is located at a position convenient for operation by the user. In some examples, the first snap catch 219 is disposed on the top of the battery pack 290, and the third operating member 294 is disposed on the upper left part or upper right part of the battery pack 290 near the battery compartment cover 116.

The third operating member 294 moves in unison with the first snap catch 291, and the first snap catch 291 is elastically connected to the housing of the battery pack 290. By pressing or releasing the third operating member 294, the first snap catch 291 is moved so that the first snap catch 291 can disengage from the first snap groove.

The battery compartment cover 116 has a closed state and an open state. In the closed state, the battery compartment cover 116 seals the battery compartment 1111. In the open state, the battery compartment 1111 is opened, and the battery pack 290 is detachably inserted into or removed from the battery compartment 1111 along the left and right direction.

The battery compartment cover 116 and the body portion 111 may be connected via a snap-fit, a threaded connection, or a magnetic connection. In some examples, an end of the battery compartment cover 116 is rotatably connected to the body portion 111, and the other end of the battery compartment cover 116 is snap-fit with the body portion 111. In some examples, one of the battery compartment cover 116 and the body portion 111 is provided with a second snap groove 1161, the other one of the battery compartment cover 116 and the body portion 111 is provided with a second snap catch 1112, and the second snap catch 1112 mates with the second snap groove 1161, thereby sealing the battery compartment 1111. In some examples, the second snap groove 1161 is disposed on the battery compartment cover 116, and the second snap catch 1112 is disposed on the body portion 111. In some examples, the battery compartment cover 116 is snap-fit with the body portion 111, and multiple snap catches are arranged at intervals along the circumferential direction of the battery compartment cover 116.

The battery compartment cover 116 is rotatably connected to the body portion 111. The battery compartment cover 116 is rotatable about a pivot axis, and the pivot axis is perpendicular to the bottom surface of the housing 110. The bottom of the housing 110 has the support surface for supporting the cut-off saw 100 when the cut-off saw 100 is placed horizontally, and the pivot axis is perpendicular to the support surface. When the battery pack 290 is mounted or removed, the cut-off saw 100 may be placed horizontally so that the support surface supports the cut-off saw 100, thereby facilitating the installation and removal operations.

In some examples, the pivot axis extends along the up and down direction of the housing 110, the battery compartment cover 116 can flip along the front and rear direction, and the battery compartment cover can be disposed on the left side or the right side of the housing 110. In some examples, the pivot axis extends along the up and down direction and is set away from the main handle 112. During the opening process, the battery compartment cover 116 flips from back to front to avoid interfering with the hand of the user holding the main handle 112. Compared with other settings such as the pivot axis extending along the front and rear direction, the pivot axis extends along the up and down direction so that the user does not need to counteract gravity when opening the battery compartment cover 116.

In some examples, the battery compartment cover 116 in the open state can freely rotate about the pivot axis with an angle of 0° to 180° relative to the closed state. In some examples, the battery compartment cover 116 in the open state rotates about the pivot axis to a preset angle relative to the closed state and remains at the preset angle, where the preset angle is greater than or equal to 90° and less than or equal to 180°.

In some examples, the battery compartment cover 116 is rotatably connected to the body portion 111 via a connecting shaft 117. The connecting shaft 117 extends along the pivot axis. The connecting shaft 117 is connected to an elastic member 118. When the second snap catch 1112 disengages from the second snap groove 1161, the elastic member 118 causes the battery compartment cover 116 to rotate about the pivot axis to the preset angle relative to the closed state and remain at the preset angle. The elastic member 118 may be a torsion spring that can provide a ejection force for opening the battery compartment cover 116 so that the battery compartment cover 116 can be smoothly opened to the preset angle. In some examples, the battery compartment cover 116 may be limited by a limiting protrusion so that the battery compartment cover 116 remains at the preset angle.

A circuit wire and a terminal block 320 are provided on the inner wall of the battery compartment 1111, the circuit wire and the terminal block 320 are connected, and the terminal block 320 is used for the plug-in of the terminals of the battery pack 290. When the battery pack 290 is inserted into the battery compartment 1111, the terminals of the battery pack 290 are plugged in the terminal block 320. The cut-off saw 100 further includes a circuit cover plate 330 disposed in the battery compartment 1111. The circuit cover plate 330 mates with the inner wall of the battery compartment 1111, thereby limiting the circuit wire and preventing the circuit wire from warping.

In some examples, the terminal block 320 is disposed on the upper inner wall of the battery compartment 1111; the circuit wire and the circuit cover plate 330 are disposed on the left inner wall or the right inner wall of the battery compartment 1111 facing the battery compartment cover 116. In some examples, the terminal block 320 is disposed on the lower inner wall, the left inner wall, or the right inner wall of the battery compartment 1111.

In some embodiments, a bus current of the cutting saw 100 is greater than or equal to 70A, that is, the power supply current of the battery pack 290 is greater than or equal to 70A, and the cable size of the bus used by the battery pack 290 in the cutting saw 100 to supply power to the motor 120 and the circuit board assembly 180 and other components through the terminal block 320 is greater than or equal to 12AWG (American Wire Gauge). It can be understood that under the above-mentioned American Wire Gauge standard, the larger the number, the smaller the wire diameter. The bus cable size greater than or equal to 12AWG described above includes cable sizes of 10AWG, 8AWG, etc. Equivalently, the cable diameter of the bus used by the battery pack 290 in the cutting saw 100 to supply power to the motor 120 and the circuit board assembly 180 and other components (single, solid, round wire diameter) is greater than or equal to 2.053mm (or 0.0808inch). In some embodiments, the bus current of the cutting saw 100 is greater than or equal to 80A, and the bus cable size in the cutting saw 100 is greater than or equal to 10AWG, that is, the bus cable diameter is greater than or equal to 2.588mm (or 0.1019inch); thereby adapting to the high-power working conditions of the cutting saw 100 to provide better current conduction capability and heat dissipation effect.

In some examples, the weight of the cut-off saw 100 is between 6.0 kg and 7.5 kg when the battery pack 290 is included, and the weight of the cut-off saw 100 is between 4.5 kg and 5.5 kg when the battery pack 290 is not included.

In some examples, the weight of the battery pack 290 is between 1.0 kg and 2.0 kg. When the output voltage of the battery pack 290 is 18 V, the output current is between 60 A and 155 A. When the output voltage of the battery pack 290 is 24 V, the output current is between 55 A and 130 A.

In some examples, the dimension of the battery compartment 1111 is between 90 mm and 130 mm along the up and down direction of the housing 110, between 90 mm and 130 mm along the front and rear direction of the housing 110, and between 140 mm and 170 mm along the left and right direction of the housing 110. The preceding dimension of the battery compartment 1111 is the inner dimension.

In some examples, the output power of the electric motor 120 is between 1.2 kW and 2.4 kW In some examples, the output power of the electric motor 120 is between 1.4 kW and 2.0 kW

The cut-off saw 100 further includes the liquid cooling system 210. The liquid cooling system 210 sprays coolant onto the saw blade 150 when the saw blade 150 is cutting. The liquid cooling system 210 includes the transfer pipe 211 for transferring coolant. In some examples, the projection of the transfer pipe 211 and the projection of the battery compartment cover 116 in the left and right direction do not coincide, thereby preventing the arrangement of the transfer pipe 211 from affecting the opening or closing of the battery compartment cover 116.

In some examples, the water inlet of the transfer pipe 211 is disposed on the rear side of the grip, and the transfer pipe 211 extends from the rear to the front at the lower part of the housing 110 and avoids the battery compartment cover 116 to prevent interference with the opening or closing of the battery compartment cover 116.

The housing of the battery pack 290 is provided with an indicator 292 for displaying the state information of the battery pack 290. The housing 110 has a transparent portion 119, and the transparent portion 119 is aligned with the indicator 292 so that the state information displayed by the indicator 292 can be observed through the transparent portion 119. The operator can clearly observe the state information.

In some examples, a window is provided on the housing 110, and a transparent cover is disposed at the window, thereby forming the transparent portion 119. In some examples, the transparent portion 119 is detachably connected to the housing 110 for easy replacement and cleaning. The transparent portion 119 and the housing 110 may be connected via a snap-fit, a screw connection, or a magnetic connection.

In some examples, the indicator 292 displays at least the remaining power information of the battery pack 290. In some examples, the indicator 292 is the remaining power indicator light for the battery pack 290. In some examples, the indicator 292 is a display screen. The indicator 292 may display numbers to accurately show the remaining power percentage of the battery pack 290. Alternatively, the indicator 292 may display the remaining power range through color changes. In some examples, green indicates sufficient power, orange indicates low power, and red indicates very low power.

The housing 110 includes the body portion 111, the grip, and the battery compartment cover 116. The grip is at least partially located behind the body portion 111. The battery compartment cover 116 seals the battery compartment 1111. The transparent portion 119 is located on the body portion 111; and/or the transparent portion 119 is located on the battery compartment cover 116. In some examples, the transparent portion 119 is located on the upper rear side of the body portion 111 and in front of the grip. Even if the user holds the grip, the transparent portion 119 is not blocked, which is convenient for the user to observe.

The housing 110 is provided with a first operating member 340, and the first operating member 340 is operated by the user to make the indicator 292 display the state information. When the first operating member 340 is triggered, the indicator 292 displays the state information. When the first operating member 340 is not triggered, the indicator 292 does not display the state information, thereby saving power. The first operating member 340 is operated by the user, for example, pressed, toggled, or rotated by the user.

In some examples, the first operating member 340 is triggered, and the indicator 292 displays the state information. After the state information is displayed for a first set duration, the indicator 292 does not display the state information. When the indicator 292 is the remaining power indicator light, the first operating member 340 is triggered, the remaining power indicator light is turned on, and after the remaining power indicator light is turned on for the first set duration, the remaining power indicator light is turned off.

Further, the housing of the battery pack 290 is provided with a second operating member 293 for the user to operate so that the indicator 292 displays the state information. The second operating member 293 is connected to the first operating member 340. When the user operates the first operating member 340 externally, the first operating member 340 acts on the second operating member 293 to make the indicator 292 display the state information, thereby partially reusing the original information display function of the battery pack 290.

In some examples, the first operating member 340 is disposed on the battery compartment cover 116. When the battery compartment cover 116 is in the closed state, the first operating member 340 is connected to the second operating member 293 through a rod-shaped part so that when the user presses the first operating member 340, the second operating member 293 is pressed, thereby displaying the power level. In some examples, the first operating member 340 is elastically connected to the housing 110, thereby facilitating the pressing operation on the first operating member 340.

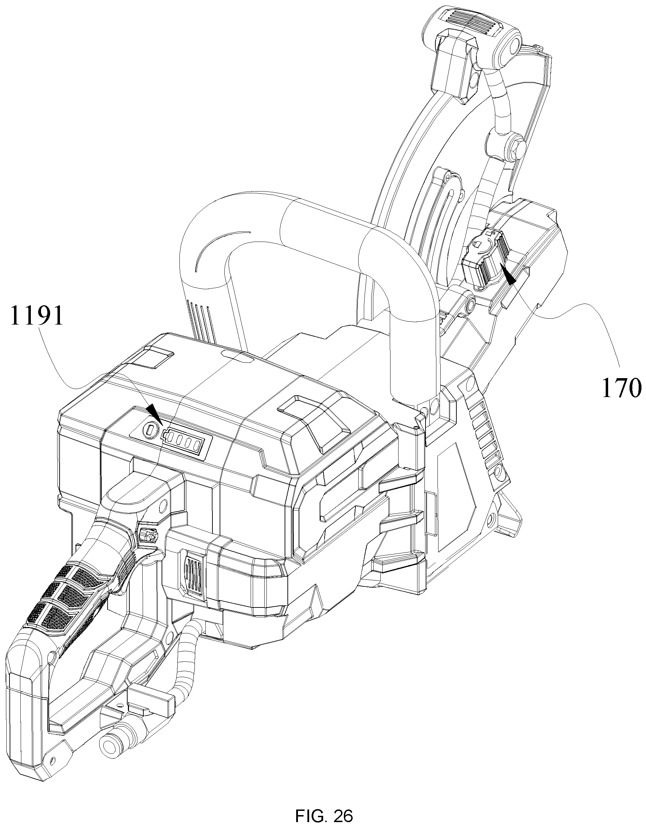

In some examples, referring to FIGS. 26 to 28, a battery indicator 1191 may be directly provided on the housing 110 to display the state information of the battery pack 290, without the need to observe the battery pack 290 through a transparent window. The battery indicator 1191 may display at least the remaining power information of the battery pack 290 and may further display various fault warning information of the battery pack 290. The battery indicator 1191 may use components including, but not limited to, the remaining power indicator light and the display screen, to achieve information display. In some examples, the battery indicator 1191 further has an operating portion 1192 such as a button, a key, or a touchscreen. In response to the user pressing or clicking the operating portion 1192 or other operations, the battery indicator 1191 can display the state information such as the remaining power. In some examples, the battery indicator 1191 may be disposed at the rear end of the body portion 111 of the housing 110 and on the front side of the grip to facilitate user observation. Of course, the battery indicator 1191 may be disposed at other positions.

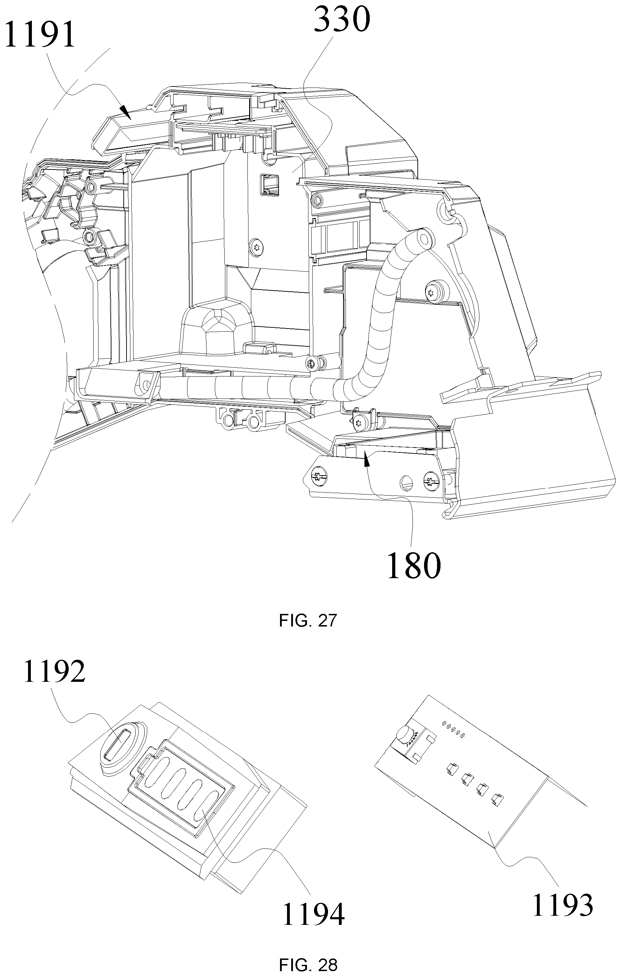

As shown in FIG. 28, the battery indicator 1191 includes the operating portion 1192 and an indicator portion 1194 that are disposed on the housing 110 and further includes a sub-circuit board 1193 disposed in the housing 110. The sub-circuit board 1193 may be electrically connected to the operating portion 1192 and the indicator portion 1194 of the battery indicator 1191 and the circuit board 181 of the cut-off saw 100 described above. When the operating portion 1192 is operated by the user, an activation signal is transmitted to the sub-circuit board 1193. In response to the signal, the sub-circuit board 1193 acquires the state information of the battery pack 290 such as the remaining power information from the circuit board 181 and correspondingly triggers the indicator portion 1194 to display the corresponding information. For example, depending on the remaining power, the corresponding number of indicator lights are turned on or the corresponding power value is displayed, and a red light is turned on or flashes to warn of over-temperature, under-current, low power, or the like. The operating portion 1192 and the indicator portion 1194 may be embedded in the upper rear end of the body portion 111 of the housing 110 and on the front side of the main handle 112. The sub-circuit board 1193 may be disposed on the back side of the operating portion 1192 and the indicator portion 1194. The sub-circuit board 1193 and the circuit board 181 may be electrically connected by a flat cable, and the flat cable may be attached to and fixed on the inner wall of the housing 110.

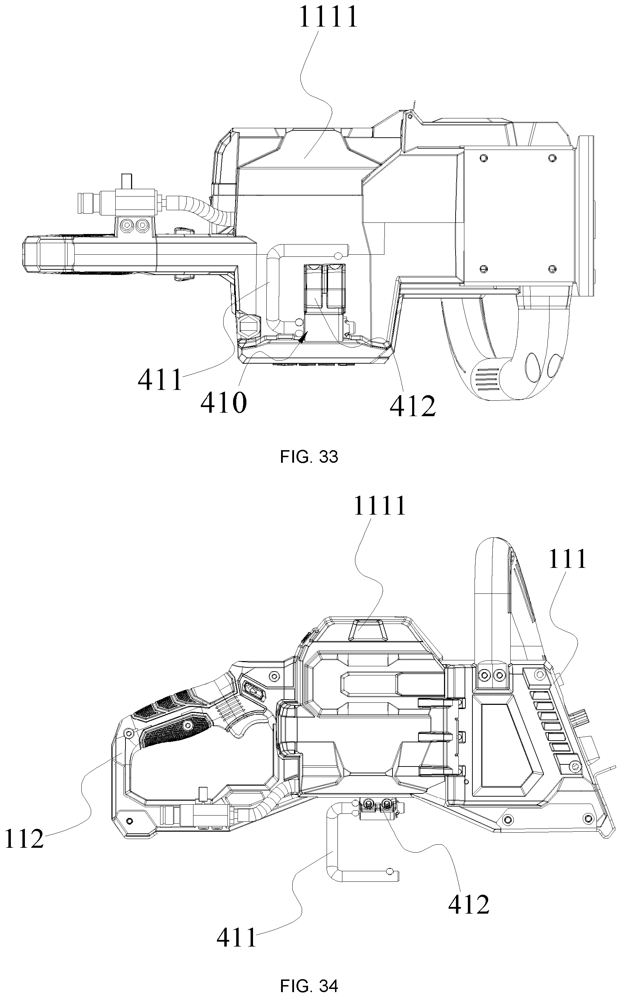

Referring to FIGS. 33 and 34, to facilitate storage or rest during work breaks for the user, as well as for hanging and draining, the cut-off saw 100 further includes a hook assembly 410 through which the cut-off saw 100 can be stably suspended in a basically vertical posture at one or more support points, including, but not limited to, being suspended on a wall, a box, or a cabinet. In some examples, as shown in FIG. 33, the hook assembly 410 may be disposed on the bottom surface or side surface of the body portion 111 of the housing 110 of the cut-off saw 100, for example, on the bottom surface of the battery compartment 1111. In some other examples, the hook assembly 410 may be disposed near the main handle 112 of the housing 110, including being disposed at the rear end of the main handle 112 or on the bottom surface of the main handle 112. Of course, the possibility of disposing the hook assembly 410 at other positions on the housing 110 of the cut-off saw 100 is not excluded. In some examples, the hook assembly 410 is disposed at a higher portion of the bottom surface of the housing 110 along the up and down direction. In some other examples, an accommodation groove may be provided inward at the position on the housing 110 where the hook assembly 410 is mounted, and a hook body 411 and a mounting member 412 are disposed in the accommodation groove, thereby avoiding the influence of the hook assembly 410 on the stability of the cut-off saw 100 placed horizontally.

In some examples, the hook assembly 410 may have a storage state and a suspended state. The hook assembly 410 may include the hook body 411 and the mounting member 412. The hook body 411 may be mounted on the housing 110 of the cut-off saw 100 through the mounting member 412. The mounting member 412 may be fixedly connected to the housing 110, and the hook body 411 may be rotatably connected to the mounting member 412. In the storage state and the suspended state, the hook body 411 may be connected to the mounting member 412 at different angles so that the cut-off saw 100 can be in different postures relative to the hook body 411.

In some examples, the hook body 411 in the suspended state may be rotated by at least 90° relative to the hook body 411 in the storage state. FIGS. 33 and 34 are used as examples. The hook body 411 and the mounting member 412 are attached to the bottom surface of the battery compartment 1111 which is higher than the bottom surface of the housing 100. A rotation axis about which the hook body 411 rotates relative to the mounting member 412 is basically parallel to the bottom surface of the battery compartment 1111. For example, the rotation axis extends along the front and rear direction or the left and right direction. The plane where the hook body 411 is located and the suspended body extends is basically parallel to the bottom surface of the battery compartment 1111 during storage and may be rotated by about 90° during suspension. The surface where the hook body 411 in the suspended state is located is basically perpendicular to the bottom surface of the battery compartment 1111. The surface where the hook body 411 is located is basically parallel to the ground during storage/suspension. Alternatively, the hook assembly 410 may be disposed at the rear end or bottom of the main handle 112, the hook body 411 may be rotated by about 90° or 180° during suspension. When the hook body 411 is rotated by 180°, the surface where the hook body 411 is located can be substantially parallel to the bottom surface of the housing 110 of the cutting saw 100 when stored/suspended. In some examples, similar to the battery compartment cover 116 described above, the hook assembly 410 may also include components such as a torsion spring so that the hook body 411 can remain at a preset angle after being rotated.

It is to be understood that the technical solutions described in the preceding examples can be freely combined without contradiction.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A cut-off saw (100), comprising:
a housing (110);
an electric motor (120) having a motor shaft (121);
an output shaft (130) for mounting and driving a saw blade (150);
a transmission assembly (140) for transmitting power between the motor shaft and the output shaft;
a circuit board assembly (180) comprising a circuit board (181) connected to a heat dissipation member; and
a heat conductive member (190) connected to the housing and at least partially located outside the housing;
wherein the housing has an opening (167), and the heat dissipation member is at least partially exposed relative to the housing through the opening and is in thermal contact with the heat conductive member.

2. The cut-off saw of claim 1, wherein the opening is located on a front bottom surface of the housing, the heat conductive member is connected to the housing around the opening and has a heat conductive plane covering the opening, and the heat dissipation member is in contact with the heat conductive member through the heat conductive plane.

3. The cut-off saw of claim 1, further comprising a liquid cooling system (210), wherein the liquid cooling system sprays coolant onto the saw blade when the cut-off saw is cutting, and the coolant moves through the heat conductive member after leaving the saw blade.

4. The cut-off saw of claim 3, wherein the liquid cooling system comprises a liquid inlet valve (214) and a transfer pipe (211), wherein the transfer pipe is configured to transfer the coolant, and the liquid inlet valve is configured to adjust a flow rate of the coolant in the transfer pipe.

5. The cut-off saw of claim 1, further comprising a sealing member (183), wherein the sealing member is disposed around the opening and fills gaps between the housing, the heat dissipation member, and the heat conductive member.

6. The cut-off saw of claim 1, wherein the heat conductive member is a wear-resistant metal member.

7. The cut-off saw of claim 1, wherein the heat dissipation member is a heat dissipation box, a side of the heat dissipation box facing away from the circuit board has a plurality of heat dissipation through holes (1821), and the plurality of heat dissipation through holes penetrate a box body of the heat dissipation box along a direction basically parallel to a plane where the circuit board is located.

8. The cut-off saw of claim 7, further comprising a fan (260), wherein the fan is mounted on the motor shaft, the housing has an air inlet (114) and an air outlet (115), and a cooling airflow enters the housing from the air inlet, flows through the circuit board assembly and the electric motor in sequence, and is discharged from the air outlet.

9. The cut-off saw of claim 8, further comprising an air guide plate (270) connected to the housing and located inside the housing, wherein the housing, the air guide plate, and the heat dissipation box form a first airflow channel between the air inlet and the plurality of heat dissipation through holes, and the cooling airflow enters the housing from the air inlet and passes through the first airflow channel and the plurality of heat dissipation through holes in sequence.

10. The cut-off saw of claim 8, wherein the electric motor has a motor housing (123), the housing and the motor housing form a second airflow channel between the electric motor and the air outlet, and the cooling airflow flows through the electric motor in the motor housing and is discharged from the air outlet through the second airflow channel.

11. The cut-off saw of claim 9 or 10, wherein the first airflow channel is basically sealed between the air inlet and the plurality of heat dissipation through holes, and/or the second airflow channel is basically sealed between the electric motor and the air outlet.

12. The cut-off saw of claim 8, wherein the air inlet is located on a left wall and/or a right wall of a middle and rear part of the housing, and the air outlet is located at a front part of the housing.

13. The cut-off saw of claim 7, wherein the heat dissipation box is located below the electric motor, a projection of the heat dissipation box and a projection of the electric motor in an up and down direction at least partially coincide, and a cooling airflow passes through the plurality of heat dissipation through holes and then enters a motor housing (123) through an inner cavity of the housing.

14. The cut-off saw of claim 1, wherein the circuit board is located below the electric motor, and a projection of the circuit board and a projection of the electric motor in an up and down direction at least partially coincide.

15. The cut-off saw of claim 1, further comprising a battery pack (290), wherein the battery pack supplies power to at least the electric motor, the housing comprises a body portion (111) and a battery compartment cover (116), a battery compartment is formed inside the body portion, and the battery compartment cover has a closed state and an open state; in the closed state, the battery compartment cover seals the battery compartment; and in the open state, the battery pack is detachably inserted into or removed from the battery compartment along a left and right direction.
